Europäisches Patentamt

European Patent Office

Office européen des brevets

(19)

(11) **EP 1 115 233 A1**

(12) **DEMANDE DE BREVET EUROPEEN**

(43) Date de publication:
**11.07.2001 Bulletin 2001/28**

(51) Int Cl.⁷: **H04L 25/03**

(21) Numéro de dépôt: **00403677.8**

(22) Date de dépôt: **26.12.2000**

(84) Etats contractants désignés:
**AT BE CH CY DE DK ES FI FR GB GR IE IT LI LU MC NL PT SE TR**
Etats d'extension désignés:
**AL LT LV MK RO SI**

(30) Priorité: **04.01.2000 FR 0000207**
**15.02.2000 FR 0002066**

(71) Demandeur: **Mitsubishi Electric Information Technology Centre Europe B.V.**
**1101 AG Amsterdam Zuidoost (NL)**

(72) Inventeur: **Penther, Bertrand**
**35700 Rennes (FR)**

(74) Mandataire: **Maillet, Alain**
**Cabinet le Guen & Maillet,**
**5, Place Newquay,**
**B.P. 70250**
**35802 Dinard Cedex (FR)**

(54) **Procédé d'égalisation d'un canal à nombre réduit d'états utilisant des décisions "symbole à symbole"**

(57) La présente invention concerne un procédé d'égalisation d'un canal destiné à être mis en oeuvre dans un récepteur d'un système de télécommunication en communication avec un émetteur via ledit canal, ledit émetteur émettant à des instants $k$ des symboles, ledit canal pouvant être représenté par un treillis constitué, pour chaque instant $k$, d'un nombre limité d'états et de branches reliant respectivement chaque état d'un instant à des états de l'instant suivant, ledit procédé consistant à prendre pour chaque instant $k$ une décision quant à la valeur du symbole qui été émis à cet instant $k$ en ne considérant qu'un nombre limité d'états dudit canal correspondant à un nombre limité de symboles reçus les plus récents.

Selon la présente invention, ledit procédé consiste en outre à considérer, pour chaque état $m$ présent, une liste de suites d'états consécutifs dudit treillis antérieurs audit état présentement considéré, dite liste de survivants, et à rendre ladite décision en tenant compte de ladite liste de survivants de tous les états présents.

Fig. 3

$J = 3$

**Description**

La présente invention concerne un procédé d'égalisation de canal destiné à être mis en oeuvre dans un récepteur en communication avec un émetteur via ledit canal.

On connaît à l'heure actuelle, deux types de procédé d'égalisation à Maximum *a posteriori,* dit également algorithme d'égalisation MAP (ou encore APP, pour *a posteriori* probability): d'une part, l'algorithme qui est décrit par Chang et Hancock dans un article intitulé "On receiver structures for channels having memory" paru dans la revue IEEE Trans. Inform. Theory, vol IT-12, pp 463-468 d'octobre 1966 et qui porte la dénomination de type I-MAP, d'autre part, l'algorithme qui est décrit par Abend et Fritchman dans un article intitulé "Statistical Detection for Communications Channels with Intersymbol Interference" paru dans Proceedings of the IEEE, vol 58, No.5 de mai 1970 et qui porte la dénomination de type II-MAP.

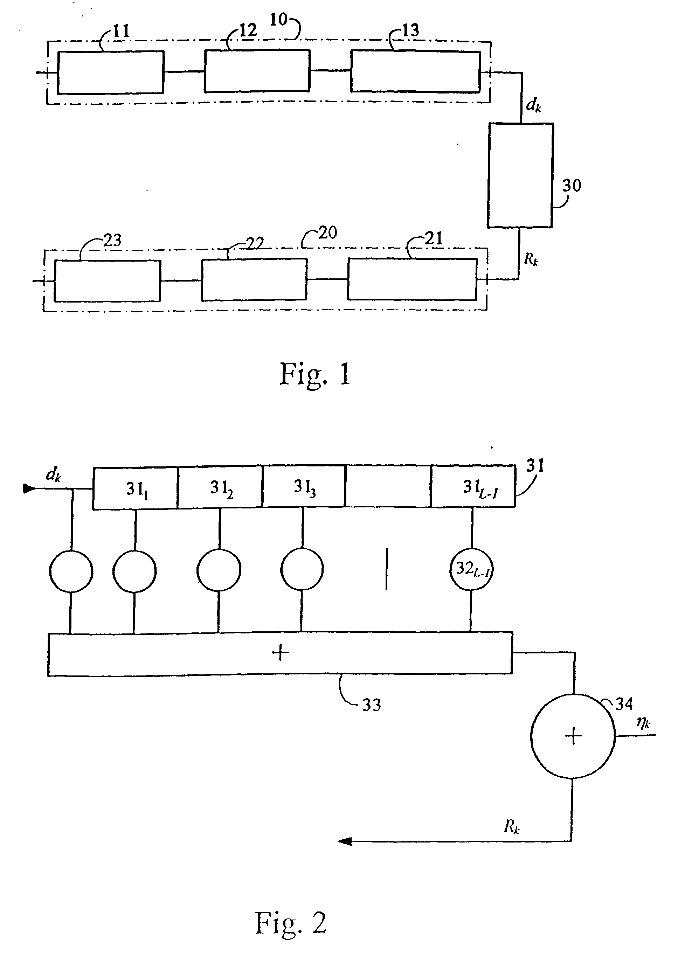

On a représenté à la Fig. 1 un modèle d'un système de télécommunication. Il est essentiellement constitué d'un émetteur 10 et d'un récepteur 20 communiquant entre eux par un canal de transmission 30.

Au niveau de l'émetteur 10, les données d'entrée sont par exemple d'abord codées dans un codeur 11 puis entrelacées dans un entrelaceur 12 et enfin modulées dans un modulateur 13. Le codeur 11 et l'entrelaceur 12 ne sont mentionnés ici qu'à titre exemplatif. Les symboles entrelacés et modulés apparaissant à la sortie du modulateur 13 au temps $k$ sont notés $d_k$ et sont transmis au récepteur 20 via le canal 30.

On a représenté à la Fig. 2 un modèle généralement utilisé pour le canal 30. Une séquence d'entrée du canal 30 est entrée dans un registre d'entrée à décalage 31 cadencé à la vitesse d'apparition des symboles de ladite séquence. Ainsi, chaque case peut loger un symbole de ladite séquence. Ce registre à décalage comporte $L-1$ cases $31_1$ à $31_{L-1}$, L étant appelé par la suite la longueur de contrainte du canal 30. Les signaux de sortie des cases $31_1$ à $31_{L-1}$ sont l'objet de modifications respectives représentées symboliquement par des cercles $32_0$ à $32_{L-1}$ et caractérisées par une réponse impulsionnelle complexe notée $c_i$ avec $i$ variant de 0 à $L-1$.

Les signaux modifiés sont additionnés entre eux dans un sommateur 33 puis additionnés, dans un autre sommateur 34, avec une source de bruit dont la sortie, au temps $k$, est notée $\eta k$. Le signal à la sortie du canal 30 est celui qui est reçu par le récepteur 20 et sa valeur, au temps $k$, est notée, $R_k$.

On peut écrire :

$$R_k = \sum_{i=0}^{L-1} c_i d_{k-i} + \eta_k$$

Comme cela est visible à la Fig. 1, au niveau du récepteur 20, le symbole reçu $R_k$ est l'objet d'une démodulation et d'une égalisation dans une unité 21, puis, de manière pendante à l'entrelaceur 12 et au codeur 11, d'un désentrelacement dans une unité 22 et enfin d'un décodage dans une unité 23.

L'égalisation mise en oeuvre dans l'unité 21 consiste essentiellement à estimer, à chaque instant $k$, le symbole $d_k$ qui a été émis par l'émetteur 10 connaissant le symbole $R_k$ qui a été reçu par le récepteur 20.

Du fait de la modélisation du canal 30 qui est telle que représentée à la Fig. 2, l'algorithme optimal mis en oeuvre selon la présente invention dans l'égaliseur 21 peut être représenté par un treillis à $M^{L-1}$ états où $M$ est la dimension de l'alphabet des signaux émis et reçus.

L'objet de l'algorithme d'égalisation du type MAP mentionné ci-dessus est de prendre une décision quant à la valeur prise par chaque symbole $d_k$. Cette décision est concrétisée par une valeur de probabilité qui, dans le cas où la dimension de l'alphabet M est égal à 2, est généralement exprimée de la manière suivante:

$$\Lambda(d_k) = Log \frac{\Pr(d_k = 1/observation)}{\Pr(d_k = 0/observation)}$$

On peut montrer que la probabilité $\Pr(d_k = 1/observation)$ est égale à la somme, pour les $M^{L-1}$ états $m$ au temps $k$, de la combinaison de la métrique avant de l'état $m$ au temps $k$, de la métrique, pour le symbole entré $R_k$, de la branche conduisant de l'état $m$ à l'état suivant $S_f^1(m)$ compte tenu du fait que le symbole sur l'entrée du canal équivalent est égal à 1 et de la métrique arrière de l'état suivant $S_f^1(m)$ au temps $k+1$. De même, on peut montrer que la probabilité $\Pr(d_k = 0/observation)$ est égale à la somme, pour les $M^{L-1}$ états $m$ au temps $k$, de la combinaison de la métrique avant de l'état $m$ au temps $k$, de la métrique, pour le symbole entré $R_k$, de la branche conduisant de l'état $m$ à l'état suivant $S_f^0(m)$ compte tenu que le symbole sur l'entrée du canal équivalent est égal à 0 et de la métrique arrière de l'état suivant $S_f^0(m)$ au temps $k+1$. On peut donc écrire, toujours dans le cas où $M = 2$ :

$$\Lambda(d_k) = Log \frac{\sum\limits_{m=1}^{2^{L-1}} \alpha_k(m)\gamma\ (R_k,m,S_f^1(m))\beta_{k+1}(S_f^1(m))}{\sum\limits_{m=1}^{2^{L-1}} \alpha_k(m)\gamma\ (R_k,m,S_f^0(m))\beta_{k+1}(S_f^0(m))}$$

Ainsi, l'algorithme de type I-MAP qui vient d'être décrit met en oeuvre aussi bien une récursion avant qu'une récursion arrière si bien qu'il peut être utilisé en détection séquence après séquence. Néanmoins, avec quelques modifications mineures, il peut être adapté pour de la détection continue. Quant à l'algorithme de type II-MAP, il ne met en oeuvre qu'une récursion avant si bien qu'il peut être utilisé aussi bien en détection continue qu'en détection séquence après séquence.

Si l'on note $K$ la dimension des blocs traités par l'algorithme I-MAP, $M$ la dimension de l'alphabet utilisé et $L$ la longueur de contrainte du canal, on peut estimer la complexité de la mémoire pour l'algorithme I-MAP comme étant égale à $K.M^{L-1}$ alors que pour l'algorithme II-MAP, elle est de l'ordre de $M^{MAX\{L-1,D\}}$ où $D$ est le retard à la décision. Par conséquent, au regard de la complexité, si la dimension des blocs K n'est pas trop importante, l'algorithme de type I-MAP est préférable, ce qui est le cas la plupart du temps en ce qui concerne les communications par mobile actuelles utilisant la transmission par des blocs de courte longueur appelés paquets. De plus, si l'on considère des communications à large bande, la longueur des paquets est très courte en temps si bien qu'il est possible de considérer que le canal est invariant sur la durée de chaque paquet.

Pour abaisser la complexité, on peut utiliser la technique des états réduits qui a déjà été décrite en application aux égaliseurs de Viterbi. Le principe d'une telle technique est de considérer un treillis dont le nombre d'états est réduit à $M^{J-1}$ états où $M$ est la dimension de l'alphabet des signaux émis et où $J$ est une longueur contrainte du canal 30 réduite par rapport à la longueur de contrainte réelle $L$ du canal. On a nécessairement $J<L$. Selon cette technique, chaque état du treillis n'est alors composé que des $J-1$ symboles les plus récents. Des décisions souples sont rendues sur la base de ces états au nombre réduit ce qui permet d'abaisser la complexité de l'égalisation.

Cependant, du fait également de ce nombre réduit d'états, les performances sont drastiquement réduites conduisant à des taux d'erreurs de bits relativement importants.

Le but de la présente invention est de prévoir un procédé d'égalisation de canal à nombre réduit d'états qui soit tel qu'il mette en oeuvre des moyens pour compenser au moins en partie l'abaissement de performances corrélatif à la réduction du nombre d'états considérés.

A cet effet, un procédé d'égalisation d'un canal destiné à être mis en oeuvre dans un récepteur d'un système de télécommunication en communication avec un émetteur via ledit canal, ledit émetteur émettant à des instants $k$ des symboles, ledit canal pouvant être représenté par un treillis constitué, pour chaque instant $k$, d'un nombre limité d'états et de branches reliant respectivement chaque état d'un instant à des états de l'instant suivant, ledit procédé consistant à prendre pour chaque instant $k$ une décision quant à la valeur du symbole qui été émis à cet instant $k$ en ne considérant qu'un nombre limité d'états dudit canal correspondant à nombre limité de symboles reçus les plus récents. Il est de plus caractérisé en ce qu'il consiste à considérer, pour chaque état $m$ présent, d'une part, une liste de suites d'états consécutifs dudit treillis antérieurs audit état présentement considéré, dits survivants, et, d'autre part, une liste des métriques d'état avant à l'instant présent, et à rendre ladite décision en tenant compte desdites listes pour tous les états présents dudit treillis.

Avantageusement, ladite décision dépend des métriques des branches qui conduisent des états antérieurs audit état présent, chaque métrique de branche étant fonction des survivants dudit état antérieur correspondant.

Selon une autre caractéristique de l'invention, pour déterminer ladite liste de métriques avant d'un état $m$ au temps $k$, on procède de la manière récursive suivante :

on détermine la métrique cumulée de chacun des chemins qui convergent, audit temps présent, vers l'état considéré, chaque valeur de métrique cumulée étant égale au cumul, pour le survivant considéré, de la métrique avant de l'état antérieur et de la métrique de la branche qui conduit de l'état antérieur considéré à l'état présent,
on classe les valeurs de métrique cumulée desdits chemins par ordre décroissant et on classe de ce fait les survivants associés auxdits chemins,
on détermine pour chaque survivant ainsi classé la métrique d'état avant dudit état $m$ au temps $k$ par combinaison des métriques cumulées pour les tous survivants dont la métrique cumulée est inférieure ou égale à la métrique cumulée dudit survivant et
on ne garde, parmi toutes les valeurs de métrique d'état avant, que les $N$ premières valeurs qui forment ainsi la liste des métriques avant de $m$ au temps $k$

La décision concernant le symbole ou la composante du symbole normalement émis au temps *k* est avantageusement une fonction du cumul, pour tous les états *m* du canal, pour tous les survivants $S_n$ considérés et pour la valeur i du symbole égale à une première valeur ou pour toutes les valeurs i de ladite composante du symbole égales à un premier ensemble de valeurs, pour un survivant $S_j$, de la métrique avant $\alpha_k^{Sj}(m)$ d'un état du canal *m* au temps présent *k* et de la métrique de la branche qui conduit, pour une donnée reçue égale à $R_k$, dudit état *m* du canal à l'état suivant $S_f^i(m)$ ainsi que du cumul, pour tous les états *m* du canal, pour tous les survivants $S_n$ considérés et pour la valeur i du symbole égale à une seconde valeur ou pour toutes les valeurs i de ladite composante du symbole égales à un second ensemble de valeurs complémentaires de la première valeur ou dudit premier ensemble de valeurs, pour un survivant $S_j$, de la métrique avant $\alpha_k^{Sj}(m)$ d'un état du canal *m* au temps présent *k* et de la métrique de la branche qui conduit, pour une donnée reçue égale à $R_k$, dudit état *m* du canal à l'état suivant $S_f^i(m)$.

Selon une variante de mise en oeuvre, la décision concernant le symbole normalement émis à un temps *k-J*+1 antérieur au temps présent de la longueur réduite du canal moins un est une fonction du cumul, pour tous les états *m* du canal, pour tous les survivants $S_n$ considérés et pour la valeur i du symbole égale à une première valeur ou pour toutes les valeurs i de ladite composante du symbole égales à un premier ensemble de valeurs, pour un survivant $S_j$, de la métrique avant $\alpha_k^{Sj}(S_b^i(m))$ d'un état précédent $S_b^i(m)$ à un état présent au temps présent *k* et de la métrique de la branche qui conduit, pour une donnée reçue égale à $R_k$, dudit état antérieur $S_b^i(m)$ à l'état présent ainsi que du cumul, pour tous les états *m* du canal, pour tous les survivants $S_n$ considérés et pour la valeur i du symbole égale à une seconde valeur ou pour toutes les valeurs i de ladite composante du symbole égales à un second ensemble de valeurs complémentaires de la première valeur ou dudit premier ensemble de valeurs, pour un survivant $S_j$, de la métrique avant $\alpha_k^{Sj}(S_b^i(m))$ d'un état précédent $S_b^i(m)$ à un état présent au temps présent *k* et de la métrique de la branche qui conduit, pour une donnée reçue égale à $R_k$, dudit état antérieur $S_b^i(m)$ à l'état présent.

Avantageusement, ladite décision pour un instant *k* dépend également de la métrique arrière à l'instant suivant *k+1* de l'état suivant considéré pour un symbole entrant donné.

Selon une mise en oeuvre, pour calculer ladite métrique arrière d'un état *m* au temps *k*, on procède de manière itérative par combinaison des cumuls des métriques arrière de tous les états suivants au temps suivant *k+1* et de toutes les métriques de branches conduisant dudit état *m* à l'état suivant considéré pour la liste de survivants dudit état *m* au temps *k*.

La décision concernant le symbole normalement émis au temps *k* est avantageusement une fonction du cumul, pour tous les états *m* du canal, pour tous les survivants $S_n$ considérés et pour la valeur du symbole ou pour la valeur i du symbole égale à une première valeur ou pour toutes les valeurs i de ladite composante du symbole égales à un premier ensemble de valeurs, pour un survivant $S_j$, de la métrique avant $\alpha_k^{Sj}(m)$ d'un état du canal *m* au temps présent *k*, de la métrique de la branche qui conduit, pour une donnée reçue égale à $R_k$, dudit état *m* du canal à l'état suivant $S_f^i(m)$ et de la métrique arrière $\beta_{k+1}(S_f^i(m))$ au temps suivant le temps présent *k* de l'état suivant $S_f^i(m)$ ainsi que du cumul, pour tous les états *m* du canal, pour tous les survivants $S_n$ considérés et pour la valeur i du symbole égale à une seconde valeur ou pour toutes les valeurs i de ladite composante du symbole égales à un second ensemble de valeurs complémentaires de la première valeur ou dudit premier ensemble de valeurs, pour un survivant $S_j$, de la métrique avant $\alpha_k^{Sj}(m)$ d'un état du canal *m* au temps présent *k*, de la métrique de la branche qui conduit, pour une donnée reçue égale à $R_k$, dudit état *m* du canal à l'état suivant $S_f^i(m)$ et de la métrique arrière $\beta_{k+1}(S_f^i(m))$ au temps suivant le temps présent *k* de l'état suivant $S_f^i(m)$.

Selon une variante de mise en oeuvre, la décision concernant le symbole normalement émis à un temps *k-J+1* antérieur au temps présent de la longueur réduite du canal moins un est une fonction du cumul, pour tous les états *m* du canal, pour tous les survivants $S_n$ considérés et pour la valeur i du symbole égale à une première valeur ou pour toutes les valeurs i de ladite composante du symbole égales à un premier ensemble de valeurs, pour un survivant $S_j$, de la métrique avant $\alpha_k^{Sj}(S_b^i(m))$ d'un état précédent $S_b^i(m)$ à un état présent au temps présent *k* de la métrique de la branche qui conduit, pour une donnée reçue égale à $R_k$, dudit état antérieur $S_b^i(m)$ à l'état présent et de la métrique arrière $\beta_{k+1}(m)$ de l'état présente *m* au temps suivant *k+1* ainsi que du cumul, pour tous les états *m* du canal, pour tous les survivants $S_n$ considérés et pour la valeur i du symbole égale à une seconde valeur ou pour toutes les valeurs i de ladite composante du symbole égales à un second ensemble de valeurs complémentaires de la première valeur ou dudit premier ensemble de valeurs, pour un survivant $S_j$, de la métrique avant $\alpha_k^{Sj}(S_b^i(m))$ d'un état précédent $S_b^i(m)$ à un état présent au temps présent *k*, de la métrique de la branche qui conduit, pour une donnée reçue égale à $R_k$, dudit état antérieur $S_b^i(m)$ à l'état présent et de la métrique arrière $\beta_{k+1}(m)$ de l'état présente *m* au temps suivant *k+1*.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :

La Fig. 1 est un schéma synoptique d'un système de télécommunication dont le récepteur met en oeuvre un procédé d'égalisation selon la présente invention,

La Fig. 2 est un schéma d'un modèle d'un canal entre un émetteur et un récepteur,

La Fig. 3 est une représentation d'un treillis représentant les états que peut prendre un canal au cours du temps ainsi que les branches qui relient lesdits états à des instants différents, et

Les Figs. 4a et 4b sont des modélisations du canal illustrant le procédé selon la présente invention.

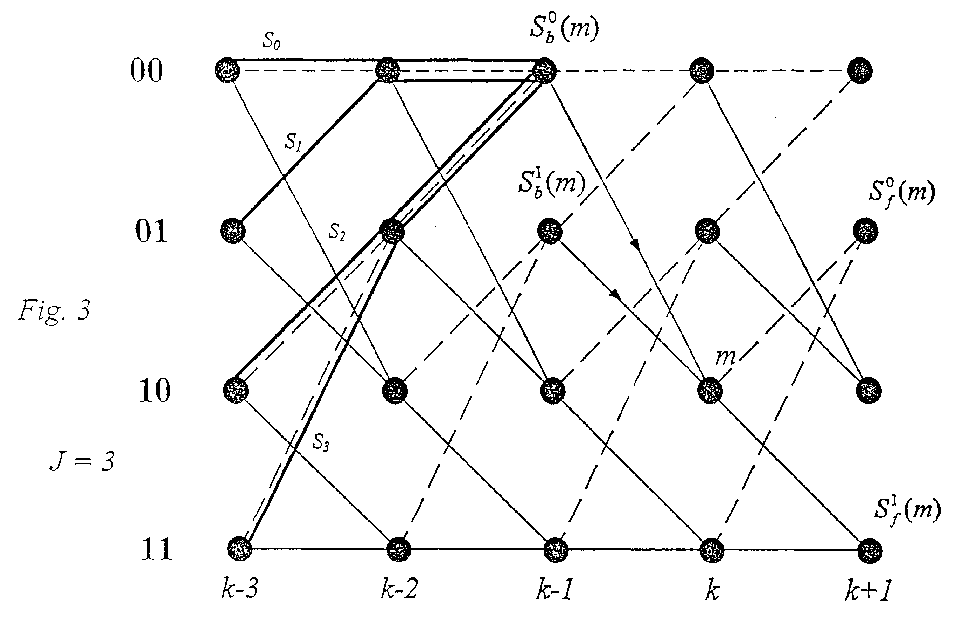

Le procédé mis en oeuvre selon la présente invention dans l'égaliseur 21 de la Fig. 1 peut être représenté par un treillis à $M^{J-1}$ états (voir Fig. 3) où $M$ est la dimension de l'alphabet des signaux émis et $J$ est une longueur contrainte du canal 30 réduite par rapport à la longueur $L$ du canal. On a $J<L$.

Pour le treillis qui est représenté à la Fig. 3, la dimension $M$ de l'alphabet utilisé est égale à deux (les deux symboles utilisés sont par exemple respectivement 0 et 1) et la longueur réduite du canal $J$ est égale à trois ($J-1 = 2$). Le treillis représenté comporte donc quatre états égaux respectivement à 00, 01, 10 et 11. Il est représenté aux temps $k-3, k-2, k-1, k$ et $k+1$. Ce treillis est à titre exemplatif identique à celui d'un codeur convolutif.

Lorsqu'on se déplace dans le treillis dans le sens positif des temps (par exemple du temps $k$ vers le temps $k+1$), on parle de sens avant (forward en terminologie anglaise). Lorsqu'on se déplace dans l'autre sens, on parle de sens arrière (backward en terminologie anglaise). Les transitions menant d'un état donné à un autre état sont appelées des branches.

Dans cette Fig. 3, les tiretés correspondent à des branches pour lesquelles l'entrée du canal a été zéro alors que les traits forts correspondent à des branches pour lesquelles l'entrée du canal a été un.

Dans la suite de la description, on considérera, à un temps $k$, un état quelconque $m$ (à la Fig. 3, l'état $m$ est 10). Cet état $m$ est issu de $M$ états (ici deux états) qui sont respectivement notés $S_b^0(m$ et $S_b^1(m)$. L'indice $b$ signifie que l'état concerné est en arrière de l'état $m$. Quant à l'exposant (0 ou 1 ici), il correspond au bit qui est sorti du canal réduit au temps $k-J$.

L'état $m$ donne naissance dans le treillis à $M$ états (ici deux états) suivants respectivement notés $S_f^0(m)$ et $S_f^1(m)$. L'indice $f$ signifie que l'état concerné est en avant de l'état $m$. Quant à l'exposant (0 ou 1 ici), il correspond au bit qui est entré dans le canal à l'instant $k$.

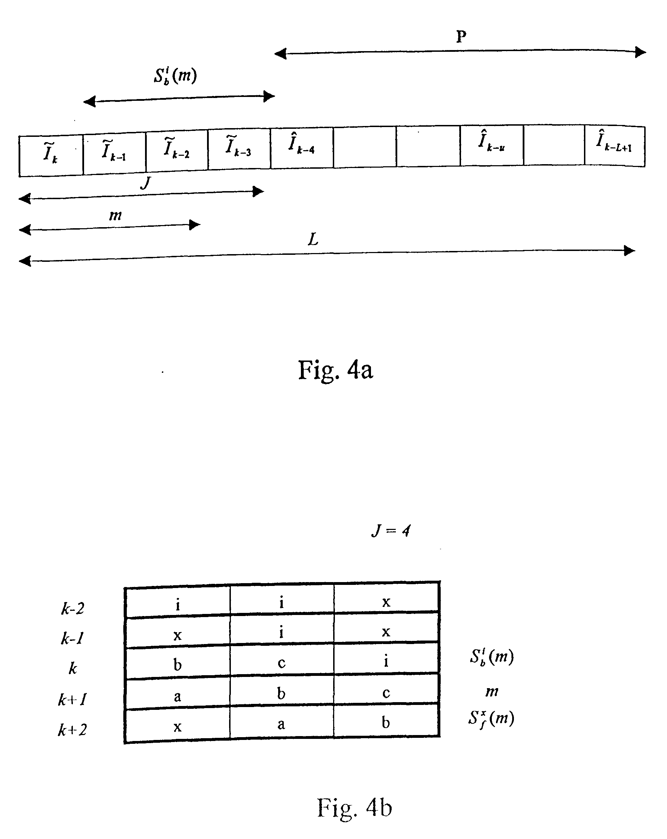

A l'instar de la Fig. 4a, on peut également modéliser le canal 30 comme étant un registre à décalage à $L$ cases dont les $J$ premières sont utilisées pour le processus d'égalisation. A la Fig. 4a, ce registre comporte dix cases ($L = 10$) et le nombre de cases utilisées est de 3 ($J = 4$). Un état général, noté $m$, du treillis, correspond aux $J-1$ premières cases du registre (de la case indicée $k$ à celle qui est indicée $k-J-2=k-2$), que l'on nommera cases d'état. Les $J-1$ cases à droite de la première (de la case indicée $k-1$ à celle qui est indicée $k-J-1=k-3$) constituent l'état précédent de l'état $m$, noté $S_b^i(m)$ signifiant état antérieur (b comme backward) à l'état $m$ pour le symbole $i$ sorti des cases d'état.

On peut voir également sur la Fig. 4a que les symboles $\tilde{I}_{k-u}$ avec $u = 0$ à $J-2$ sont les éléments qui composent l'état $m$ et que les symboles $\tilde{I}_{k-u}$ avec $u = 1$ à $J-1$ sont les éléments qui composent l'état antérieur considéré $S_b^i(m)$.

On notera que, du fait que l'état $m$ est un état tronqué qui ne comporte que les $J$-1 symboles reçus les plus récents, un survivant peut être considéré comme une concaténation de $L-J$ valeurs de décision dure (ne pouvant prendre que $M$ valeurs discrètes) notées :

$$\left\{ \hat{I}_{k-J}^n, \cdots, \hat{I}_{k-L}^n \right\}.$$

Selon le procédé de la présente invention, on détermine une métrique de la branche qui conduit d'un état antérieur $S_b^i(m)$ considéré à un état $m$ au temps $k$ et ce, pour un symbole reçu $R_{k-1}$ supposé égal à $i$. Cette métrique de branche est notée

$$\gamma\left( R_{k-1}, S_b^i(m), m, Sn\left( S_b^i(m), k-1 \right) \right).$$

Selon la présente invention, sa valeur est déterminée de manière à dépendre du chemin d'état à état qui conduit directement ou indirectement à l'état $m$ via l'état antérieur $S_b^i(m)$. Un chemin qui mène à l'état antérieur $S_b^i(m)$ est nommé par la suite survivant de l'état $S_b^i(m)$ au temps $k-1$ et noté $S_n(S_b^i(m), k-1)$ (ou noté de manière simplifiée $S_n$)

A la Fig. 4a, on peut voir que les survivants sont constitués des éléments qui composent les différents états $S_b^i(m)$ précédant le temps $k$ et donc de l'ensemble des symboles $\hat{I}_{k-u}$ avec $u = J$ à $L-1$.

A la Fig. 3, on a représenté, par des traits très forts, quatre survivants du seul état antérieur $S_b^0(m)$ au temps $k$-1 de l'état $m$ au temps $k$, survivants de longueur $L-J = 2$ respectivement référencés, par souci de simplification $S_0$ à $S_3$.

On peut montrer que, dans le cas exemplatif d'une métrique Euclidienne et du fait que pour le processus d'égalisation, on considère une longueur de contrainte du canal réduite $J$ inférieure à la longueur du canal $L,$ la métrique de branche est donnée par la relation suivante :

$$\gamma\left(R_{k-1}, S_b^i(m), m, Sn\left(S_b^i(m), k-1\right)\right) = \Pr\left(m, R_{k-1}\middle|S_b^i(m)\right) = \exp\left(-\left|R_{k-1} - \sum_{u=0}^{J-1}\widetilde{I}_{k-u}c_u - \sum_{i=J}^{L-1}\hat{I}_{k-u}c_u\right|^2 / 2\sigma^2\right)$$

où $\sigma^2$ est la variance de la source de bruit. On rappelle que les coefficients $c_u$ sont représentatifs de la réponse impulsionnelle du canal au temps $k$ (voir également la Fig. 2 et les cercles $32_0$ à $32_{L-1}$).

Dans la suite de la description, on utilisera la notation suivante :

$$\gamma\left(R_{k-1}, S_b^i(m), m, Sn\left(S_b^i(m), k-1\right)\right) = \gamma^{Sn}\left(R_{k-1}, S_b^i(m), m\right)$$

Selon la présente invention, une fois déterminée la liste des métriques de la branche qui conduit à l'état $m$ au temps $k$, on va déterminer la liste des métriques avant de cet état $m$ au temps $k$. Cette liste de métriques avant de l'état $m$ est calculée de manière récursive.

Pour ce faire, on considère, à l'instant $k$-$1$, l'état $S_b^j(m)$ et la liste des $N$ métriques d'état avant $\alpha_{k-1}^{S_n}\left(S_b^i(m)\right)$ associée pour la liste des $N$ survivants $S_n$.

Du fait qu'il y a $M$ états $S_b^j(m)$ antérieurs à un état $m$ et $N$ survivants associés à chacun de ces états antérieurs, c'est un total de $N.M$ chemins qui, à l'instant suivant $k$, convergent vers un état suivant $m$ considéré. On calcule la métrique cumulée $MC_{k-1}^{S_n}$ de chacun de ces chemins qui est alors définie comme étant égale au produit de la métrique avant $\alpha_{k-1}^{S_n}\left(S_b^i(m)\right)$ de l'état antérieur $S_b^j(m)$ pour le survivant $S_n$ et de la métrique de la branche

$$\gamma^{Sn}\left(R_{k-1}, S_b^i(m), m\right)$$

également pour le survivant

$$S_n\;(MC_{k-1}^{S_n} = \alpha_{k-1}^{S_n}\left(S_b^i(m)\right).\gamma^{Sn}\left(R_{k-1}, S_b^i(m), m\right)).$$

On classe ces $N.M$ valeurs de métrique cumulée par ordre décroissant. De ce fait, on classe aussi les survivants associés par ordre décroissant puis on les renumérote dans l'ordre des valeurs de métrique. Ainsi, pour la métrique la plus forte, le survivant au temps $k$-$1$ est noté $S_0$ et, pour la métrique la plus faible, le survivant au temps $k$-$1$ est noté $S_{NM-1}$.

On détermine alors pour chaque survivant $S_n$ renuméroté, la métrique d'état avant $\alpha_k^{S_n}(m)$ à l'instant $k$ par combinaison (ici sommation) des métriques cumulées $MC_{k-1}^{S_{n'}}$ calculées précédemment pour les tous survivants $S_{n'}$ dont les métriques cumulées $MC_{k-1}^{S_{n'}}$ sont inférieures ou égales à la métrique cumulée $MC_{k-1}^{S_n}$ dudit survivant $S_n$. On peut donc écrire :

$$\alpha_k^{S_n}(m) = \sum_{n'=n}^{N.M-1}MC_{k-1}^{S_{n'}} = \sum_{n'=n}^{N.M-1}\alpha_{k-1}^{Sn'}\left(S_b^i(m)\right)\cdot\gamma^{Sn'}\left(R_{k-1}, S_b^i(m), m\right)$$

avec $MC_{k-1}^{S_{n'}} < MC_{k-1}^{S_n}\;\forall n'$.

En réalité, on va uniquement calculer les $N$ premières valeurs $\alpha^{S_n}_k(m)$.

A chaque valeur $\alpha_k^{S_n}(m)$, on considère le survivant $S_n$ du temps $k$-$1$ qui a servi à son calcul et on lui concatène la branche qui conduit de l'état antérieur $S_b^j(m)$ associé à l'état $m$ de manière à former un nouveau survivant au temps $k$ qui est également noté $S_n$.

On a donc finalement la liste des métriques d'état avant suivants :

$$\alpha_k^{S_0}(m) = \sum_{n'=0}^{N.M-1} MC_{k-1}^{S_{n'}} = \sum_{n'=0}^{N.M-1} \alpha_{k-1}^{Sn}\left(S_b^i(m)\right)\cdot \gamma^{Sn}\left(R_{k-1}, S_b^i(m), m\right)$$

• • •

$$\alpha_k^{S_N}(m) = \sum_{n'=N}^{N.M-1} MC_{k-1}^{S_{n'}} = \sum_{n'=N}^{N.M-1} \alpha_{k-1}^{Sn}\left(S_b^i(m)\right)\cdot \gamma^{Sn}\left(R_{k-1}, S_b^i(m), m\right)$$

à laquelle correspond, pour chaque état $m$, une liste de survivants $S_0$ à $S_{N-1}$ au temps $k$.

On notera que, dans chacune de ces égalités ci-dessus, les survivants $S_0$ à $S_{N-1}$ du membre de gauche sont les survivants au temps $k$ alors que les survivants $S_0$ à $S_{N.M-1}$ du membre de droite sont les survivants au temps $k-1$.

On notera encore que la métrique avant $\alpha_k^{S_0}(m)$ possède la valeur de métrique la plus forte.

Il est maintenant possible de calculer, pour chacun des $N$ survivants $S_0$ à $S_{N-1}$ ainsi déterminés, la métrique de la branche $\gamma(R_k, m, S_f^i(m), Sn(m,k))$ qui conduit de l'état $m$ au temps $k$ à l'état suivant $S_f^i(m)$ compte tenu que le symbole sur l'entrée du canal équivalent est égal à $i$. Ce calcul est réalisé comme précédemment. On a alors (à titre exemplatif dans le cas de la métrique Euclidienne):

$$\gamma\left(R_k, m, S_f^i(m), Sn(m,k)\right) = \Pr\left(S_f^i(m), R_k \middle| m\right) = \exp\left(-\left|R_k - \sum_{i=0}^{J-1} \widetilde{I}_{k-u} c_u - \sum_{i=J}^{L-1} \hat{I}_{k-u} c_u\right|^2 / 2\sigma^2\right)$$

On va maintenant déterminer une métrique arrière, notée $\beta_k$, de l'état $m$ qui dépend du chemin arrière qui suit ledit état $m$. Pour ce faire, on procède de manière itérative par combinaison (ici sommation) des cumuls (ici les produits) des métriques arrière

$$(\beta_{k+1}\left(S_f^i(m)\right)$$

de tous les états suivants $S_f^i(m)$ au temps suivant $k+1$ et de toutes les métriques de branches

$$\gamma\left(R_k, m, S_f^i(m), Sn(m,k)\right)$$

conduisant dudit état $m$ à l'état suivant considéré pour la liste de survivants $S_0$ à $S_{N-1}$ dudit état $m$ au temps $k$.

La métrique arrière est donc donnée par la relation suivante :

$$\beta_k(m) = \sum_{\substack{i \in [0, M-1] \\ n \in [0, N-1]}} (\beta_{k+1}\left(S_f^i(m)\right)\cdot \gamma^{Sn}\left(R_k, m, S_f^i(m)\right)$$

avec

$$\gamma^{Sn}\left(R_k, m, S_f^i(m)\right) = \Pr\left(R_k, d_k = i, S_{k+1} = S_f^i(m) / S_k = m, Sn(m,k)\right)$$

où chacun des survivants $S_n(m,k)$ $n = 0$ à $N$-1 a été déterminé durant le calcul des métriques d'état avant $\alpha_k^{S_n}(m)$.

On notera que, dans la relation précédente, la valeur de la métrique arrière

$$\beta_{k+1}\left(S_j^i(m)\right)$$

au temps $k+1$ de l'état $S_f^i(m)$ ne dépend pas du survivant considéré $S_n(m,k)$. Ce dernier dépend en effet de l'état $m$ au temps $k$ et non de l'état $S_f^i(m)$ au temps $k + 1$. En conséquence, il n'y a pas de correspondance directe entre un survivant $S_n(m,k)$ et la métrique arrière

$$\beta_{k+1}\left(S_j^i(m)\right).$$

C'est pourquoi le calcul récursif ne donne qu'une unique valeur de métrique $\beta_k(m)$ commun à tous les survivants $S_n$ $(m,k)$ et à tous les symboles entrant $i$.

Ayant déterminé les valeurs des métriques d'état avant, des métriques d'état arrière et des métriques de branche pour chaque symbole $i$ utilisé, on va déterminer la décision $\Lambda(d_k)$ concernant le temps $k$. Du fait qu'elles sont complémentaires, la valeur de cette décision est égale au rapport de la probabilité que, compte tenu du signal reçu, le symbole émis ait été à une première valeur sur la probabilité que, compte tenu du signal reçu, le symbole émis ait été à une seconde valeur. On a donc, pour le cas $M = 2$ :

$$\Lambda(d_k) = Log\frac{\Pr(d_k = 1/observation)}{\Pr(d_k = 0/observation)}$$

La probabilité $\Pr(d_k = 1/observation)$ est égale à la somme, pour les $M^{J-1}$ états $m$ au temps $k$ et pour les $N$ survivants considérés $S_0$ à $S_{N-1}$, de la combinaison de la métrique avant de l'état $m$ au temps $k$, de la métrique de la branche conduisant de l'état $m$ à l'état suivant $S_f^1(m)$ compte tenu que le symbole sur l'entrée du canal équivalent est égal à 1, et de la métrique arrière de l'état suivant $S_f^1(m)$.

Par ailleurs, par souci de simplification, la notation de la métrique précédemment utilisée $\gamma(R_k,m,S_f^i(m)),Sn$ $(m,k)) = \gamma_j^{Sn}(R_k,m,S_f^i(m))$ est modifiée pour devenir $\gamma_j^{Sn}(R_k,m)$.

On peut donc maintenant écrire (pour $M = 2$) :

$$\Pr\left(d_k = 1/observation\right) = \sum_{m=1}^{2^{J-1}}\sum_{j=0}^{N-1}\alpha_k^{Sj}(m)\gamma_1^{Sj}(R_k,m)\beta_{k+1}(S_f^1(m))$$

De même, on peut montrer que la probabilité $\Pr(d_k = 0/observation)$ est égale à la somme, pour les $M^{J-1}$ états $m$ au temps $k$ et pour les $N$ survivants considérés $S_0$ à $S_{N-1}$, de la combinaison de la métrique avant de l'état $m$ au temps $k$, de la métrique de la branche conduisant de l'état $m$ à l'état suivant $S_f^0(m)$ compte tenu que le symbole sur l'entrée du canal équivalent est égal à 0 et de la métrique arrière de l'état suivant $S_f^1(m)$. On peut donc écrire (pour $M = 2$) :

$$\Pr\left(d_k = 0/observation\right) = \sum_{m=1}^{2^{J-1}}\sum_{j=0}^{N-1}\alpha_k^{Sj}(m)\gamma_0^{Sj}(R_k,m)\beta_{k+1}(S_f^0(m))$$

On peut donc écrire :

$$\Lambda(d_k) = Log \frac{\sum_{m=1}^{2^{J-1}} \sum_{j=0}^{N-1} \alpha_k^{S_j}(m) \gamma_1^{S_j}(R_k, m) \beta_{k+1}(S_f^1(m))}{\sum_{m=1}^{2^{J-1}} \sum_{j=0}^{N-1} \alpha_k^{S_j}(m) \gamma_0^{S_j}(R_k, m) \beta_{k+1}(S_f^0(m))} \qquad \text{(Eq 1)}$$

Lorsque deux survivants sont gardés ($N = 2$), on a :

$$\Lambda(d_k) = Log \frac{\sum_{m=1}^{2^{J-1}} \alpha_k^{S0}(m) \gamma_1^{S0}(R_k, m) \beta_{k+1}(S_f^1(m) + \sum_{m=1}^{2^{J-1}} \alpha_k^{S1}(m) \gamma_1^{S1}(R_k, m) \beta_{k+1}(S_f^1(m)}{\sum_{m=1}^{2^{J-1}} \alpha_k^{S0}(m) \gamma_0^{S0}(R_k, m) \beta_{k+1}(S_f^0(m)) + \sum_{m=1}^{2^{J-1}} \alpha_k^{S1}(m) \gamma_0^{S1}(R_k, m) \beta_{k+1}(S_f^0(m))}$$

Le calcul récursif des métriques avant et celui des métriques arrière ne sont pas symétriques du fait notamment que le calcul des métriques arrière utilise les survivants calculés durant le processus de calcul des métriques avant.

Lorsque le canal équivalent déphase très peu, il est encore intéressant d'utiliser le calcul des métriques arrière pour améliorer les performances. Cependant, dans le cas de canaux très fortement sélectifs en fréquence, le calcul des métriques arrière peut causer des erreurs de propagation ce qui a pour conséquence de dégrader les performances. Cela signifie en outre que le calcul des métriques arrière est moins fiable que celui des métriques avant.

De plus, afin d'éviter de devoir stocker les survivants entre le calcul des métriques avant et celui des métriques arrière, il peut être intéressant d'omettre les métriques arrière dans le calcul de la décision.

Les équations générales ci-dessus peuvent alors s'écrire :

$$\Lambda(d_k) = Log \frac{\sum_{m=1}^{2^{J-1}} \sum_{j=0}^{N-1} \alpha_k^{S_j}(m) \gamma_1^{S_j}(R_k, m)}{\sum_{m=1}^{2^{J-1}} \sum_{j=0}^{N-1} \alpha_k^{S_j}(m) \gamma_0^{S_j}(R_k, m)} \qquad \text{(Eq 2)}$$

Des performances accrues peuvent être obtenues en rendant la décision au temps *k-J+1* en tenant compte des symboles reçus au temps *k*. En effet, la métrique avant $\alpha_k(m)$ de l'état *m* au temps *k* est d'autant plus fiable que le temps *k* croît. Pour ce faire, dans les expressions générales ci-dessus, on a remplacé, aussi bien au numérateur qu'au dénominateur, l'état *m* par l'état précédent $S_b^1(m)$ et l'état suivant $S_b^1(m)$ par *m*. Comme cela est visible à la Fig. 4b, l'état précédent $S_b^1(m)$ de l'état *m* est l'état pour lequel le symbole *i* est sortant, lequel a été introduit au temps *k-J+1* (ici, *J = 4)*. En conséquence, on peut écrire :

$$\Lambda(d_{k-J+1}) = Log \frac{\sum_{m=1}^{2^{J-1}} \sum_{j=0}^{N-1} \alpha_k^{S_j}(S_b^1(m)) \widetilde{\gamma}_1^{S_j}(R_k, m) \beta_{k+1}(m)}{\sum_{m=1}^{2^{J-1}} \sum_{j=0}^{N-1} \alpha_k^{S_j}(S_b^0(m)) \widetilde{\gamma}_0^{S_j}(R_k, m) \beta_{k+1}(m)} \qquad \text{(Eq 3)}$$

avec $\gamma(R_k, S_b^i(m), m, S_j) = \gamma^{S_j}(R_k, S_b^i(m), m) = \widetilde{\gamma}_i^{S_j}(R_k, m)$

Si maintenant l'on omet la métrique d'état arrière $\beta_{k+1}(m)$, on obtient :

$$\Lambda\left(d_{k-J+1}\right) = Log \frac{\sum_{m=1}^{2^{J-1}} \sum_{j=0}^{N-1} \alpha_k^{S_j}(S_b^1(m)) \widetilde{\gamma}_1^{S_j}(R_k, m)}{\sum_{m=1}^{2^{J-1}} \sum_{j=0}^{N-1} \alpha_k^{S_j}(S_b^0(m)) \widetilde{\gamma}_0^{S_j}(R_k, m)} \quad \text{(Eq 4)}$$

On notera que la mise en oeuvre ci-dessus où la décision est rendue avec un temps de retard peut requérir une queue de paquet de longueur *J-1* pour pouvoir calculer la décision souple $\Lambda(d_{k-J-1})$ à la fin du paquet de données.

La description qui vient d'être faite concerne un procédé d'égalisation manipulant des probabilités. En pratique, de manière strictement équivalente, on pourra mettre en oeuvre un procédé d'égalisation qui manipulera le logarithme à base 10 des mêmes probabilités, en utilisant notamment une fonction E non linéaire. Dans ce cas, la décision concernant le symbole émis au temps *k* peut s'écrire :

$$\Lambda(d_k) = E(\Pr(d_k = 1/observation)) - E(\Pr(d_k = 0/observation))$$

On peut montrer que la correspondance entre le procédé d'égalisation manipulant des probabilités et le procédé d'égalisation manipulant des logarithmes de ces probabilités peut être faite en substituant les sommes $\Sigma$ par la fonction E et les produits par des sommes.

De plus, la fonction E est avantageusement de la forme suivante :

$$E(A,B) = \max(A,B) + Log[1 + \exp(-|A-B|)]$$

Pour diminuer la complexité de calcul, une forme simplifiée de la fonction E pourrait être :

$$E(A,B) = \max(A,B)$$

En ce qui concerne la métrique de branche $\Gamma^{Sn}(R_k, m, m')$ qui conduit, pour un survivant $S_n$ et pour un symbole d'entrée supposé être égal à $R_k$, de l'état *m* à l'état *m'* au temps *k+1*, on peut ainsi écrire :

$$\Gamma^{Sn}\left(R_k, m, m'\right) = Log(\Pr\left(S_{k+1} = m', R_k | S_k = m, S_n\right) = Log\left(\gamma^{Sn}\left(R_k, m, m'\right)\right))$$

La liste des métriques d'état avant $\alpha_k^{S_n}(m)$ sont déterminées de manière récursive et sont, comme précédemment, classées selon leurs valeurs respectives en fonction des survivants $S_n$ considérés. Pour ce faire, on procède de la manière suivante.

On considère, à l'instant *k-1*, l'état $S_b^i(m)$ et la liste des métriques d'état avant

$$\alpha_{k-1}^{S_n}\left(S_b^i(m)\right)$$

associé pour la liste de *N* survivants $S_n$.

Du fait qu'il y a *M* états $S_b^i(m)$ antérieurs à un état *m* et *N* survivants associés à chacun de ces états antérieurs, c'est un total de *N.M* chemins qui, à l'instant suivant *k*, convergent vers un état suivant *m* considéré. On calcule la métrique cumulée $MC_{k-1}^{S_n}$ de chacun de ces chemins qui est alors définie comme étant égale à la somme de la métrique avant

$$\alpha_{k-1}^{S_n}\left(S_b^i(m)\right)$$

de l'état antérieur $S_b^i(m)$ pour le survivant $S_n$ et de la métrique de la branche $\Gamma^{Sn}(R_{k-1}, S_b^i(m), m)$ également pour le survivant

$$S_n \; (MC_{k-1}^{S_n} = \alpha_{k-1}^{S_n}\left(S_b^i(m)\right) + \Gamma^{Sn}\left(R_{k-1}, S_b^i(m), m\right)).$$

On classe ces $N.M$ valeurs de métrique cumulée par ordre décroissant. De ce fait, on classe aussi les survivants associés par ordre décroissant puis on les renumérote dans l'ordre des valeurs de métrique. Ainsi, pour la métrique la plus forte, le survivant au temps $k$-$1$ est noté $S_0$ et, pour la métrique la plus faible, le survivant au temps $k$-$1$ est noté $S_{NM-1}$.

On détermine alors pour chaque survivant $S_n$ renuméroté, la métrique d'état avant $\alpha_k^{S_n}(m)$ à l'instant $k$ par combinaison (ici la fonction $E$ ci-dessus) des métriques cumulées $MC_{k-1}^{S_{n'}}$ calculées précédemment pour les tous survivants $S_{n'}$ dont les métriques cumulées $MC_{k-1}^{S_{n'}}$ sont inférieures ou égales à la métrique cumulée $MC_{k-1}^{S_n}$ dudit survivant $S_n$. On peut donc écrire :

$$\alpha_k^{S_n}(m) = \mathop{E}_{n'=n}^{N.M-1} MC_{k-1}^{S_{n'}} = \mathop{E}_{n'=n}^{N.M-1} \alpha_{k-1}^{Sn'}\left(S_b^i(m)\right) + \Gamma^{Sn'}\left(R_{k-1}, S_b^i(m), m\right)$$

avec $MC_{k-1}^{S_{n'}} < MC_{k-1}^{S_n} \; \forall n'$.

En réalité, on va uniquement calculer les $N$ premières valeurs $\alpha_k^{S_n}(m)$.

A chaque valeur $\alpha_k^{S_n}(m)$, on considère le survivant $S_n$ du temps $k$-$1$ qui a servi à son calcul et on lui concatène la branche qui conduit de l'état antérieur $S_b^i(m)$ associé à l'état $m$ de manière à former un nouveau survivant au temps $k$ qui est également noté $S_n$.

On a donc finalement la liste de métriques d'état avant suivante :

$$\alpha_k^{S_0}(m) = \mathop{E}_{n'=0}^{N.M-1} MC_{k-1}^{S_{n'}} = \mathop{E}_{n=0}^{N.M-1} \alpha_{k-1}^{Sn'}\left(S_b^i(m)\right) + \Gamma^{Sn'}\left(R_{k-1}, S_b^i(m), m\right)$$

$$\bullet \quad \bullet \quad \bullet$$

$$\alpha_k^{S_N}(m) = \mathop{E}_{n'=N}^{N.M-1} MC_{k-1}^{S_{n'}} = \mathop{E}_{n'=N}^{N.M-1} \alpha_{k-1}^{Sn'}\left(S_b^i(m)\right) + \Gamma^{Sn'}\left(R_{k-1}, S_b^i(m), m\right)$$

à laquelle correspond une liste, pour chaque état $m$ considéré, une liste de survivants $S_0$ à $S_{N-1}$.

Dans chacune de ces égalités, les survivants $S_0$ à $S_{N-1}$ du membre de gauche sont les survivants au temps $k$ alors que les survivants $S_0$ à $S_{N.M-1}$ du membre de droite sont les survivants au temps $k$-$1$.

On notera encore que la métrique avant $\alpha_k^{S_0}(m)$ possède la valeur de métrique la plus forte.

Quant à la métrique d'état arrière $\beta_{k+1}(S_j^i(m))$, elle est déterminée de manière récursive comme précédemment. Elle est maintenant égale à :

$$\beta_k(m) = \mathop{E}_{\substack{i \in [0, M-1] \\ n \in [0, N-1]}}\left(\beta_{k+1}\left(S_f^i(m)\right) + \Gamma^{Sn}\left(R_k, m, S_f^i(m)\right)\right)$$

Ainsi, l'expression de la valeur prise par la décision $\Lambda(d_k)$ concernant le symbole $d_k$ émis au temps $k$ peut s'écrire, dans le cas général, sous la forme :

$$\Lambda(d_k) = \mathop{E}_{m=1}^{2^{J-1}} \mathop{E}_{j=0}^{N-1} \left[ \alpha_k^{Sj}(m) + \Gamma_1^{Sj}(R_k,m) + \beta_{k+1}(S_f^1(m)) \right] - \mathop{E}_{m=1}^{2^{J-1}} \mathop{E}_{j=0}^{N-1} \left[ \alpha_k^{Sj}(m) + \Gamma_0^{Sj}(R_k,m) + \beta_{k+1}(S_f^0(m)) \right]$$

$$(Eq\ 5)$$

Dans cette expression et les suivantes, on a changé la notation en ce qui concerne la métrique de branche. On a en effet:

$$\Gamma_i^{Sn}(R_k,m) = \Gamma^{Sn}(R_k,m,S_f^i(m)) = \Gamma(R_k,m,S_f^i(m),Sn(m,k))$$

Dans le cas où les métriques arrière ne sont pas considérées, cette expression générale (Eq 5) peut s'écrire :

$$\Lambda(d_k) = \mathop{E}_{m=1}^{2^{J-1}} \mathop{E}_{j=0}^{N-1} \left[ \alpha_k^{Sj}(m) + \Gamma_1^{Sj}(R_k,m) \right] - \mathop{E}_{m=1}^{2^{J-1}} \mathop{E}_{j=0}^{N-1} \left[ \alpha_k^{Sj}(m) + \Gamma_0^{Sj}(R_k,m) \right] \qquad (Eq\ 6)$$

Dans le cas où le nombre de survivants conservés à chaque temps $k$ est égal à deux ($N = 2$), cette expression peut s'écrire :

$$\Lambda(d_k) = \mathop{E}_{\substack{m=1 \\ i=0,1}}^{2^{L-1}} \left[ \alpha_k^{Sj}(m) + \Gamma_1^{Sj}(R_k,m) + \beta_{k+1}(S_f^1(m)) \right] - \mathop{E}_{\substack{m=1 \\ i=0,1}}^{2^{L-1}} \left[ \alpha_k^{Sj}(m) + \Gamma_0^{Sj}(R_k,m) + \beta_{k+1}(S_f^0(m)) \right]$$

Dans le cas où les métriques arrière ne sont pas considérées, cette expression générale avec $N = 2$ peut s'écrire :

$$\Lambda(d_k) = \mathop{E}_{\substack{m=1 \\ i=0,1}}^{2^{L-1}} \left[ \alpha_k^{Sj}(m) + \Gamma_1^{Sj}(R_k,m) \right] - \mathop{E}_{\substack{m=1 \\ i=0,1}}^{2^{L-1}} \left[ \alpha_k^{Sj}(m) + \Gamma_0^{Sj}(R_k,m) \right]$$

Enfin, dans le cas où la décision au temps $k$-$J$+ $l$ est rendue en tenant compte des symboles reçus au temps $k$, on peut écrire, dans le cas général :

$$\Lambda(d_{k-J+1}) = \mathop{E}_{m=1}^{2^{J-1}} \mathop{E}_{j=0}^{N-1} \left[ \alpha_k^{Sj}(S_b^1(m)) + \widetilde{\Gamma}_1^{Sj}(R_k,m) + \beta_{k+1}(m) \right] - \mathop{E}_{m=1}^{2^{J-1}} \mathop{E}_{j=0}^{N-1} \left[ \alpha_k^{Sj}(S_b^0(m)) + \widetilde{\Gamma}_0^{Sj}(R_k,m) + \beta_{k+1}(m) \right]$$

$$Eq\ 7$$

et, si l'on ne tient pas compte des métriques d'état arrière :

$$\Lambda(d_{k-J+1}) = \mathop{E}_{m=1}^{2^{J-1}} \mathop{E}_{j=0}^{N-1} \left[ \alpha_k^{Sj}(S_b^1(m)) + \widetilde{\Gamma}_1^{Sj}(R_k,m) \right] - \mathop{E}_{m=1}^{2^{J-1}} \mathop{E}_{j=0}^{N-1} \left[ \alpha_k^{Sj}(S_b^0(m)) + \widetilde{\Gamma}_0^{Sj}(R_k,m) \right]$$

$$Eq\ 8$$

Dans ces deux expressions, on a utilisé la notation des métriques de branche de la manière suivante :

$$\widetilde{\Gamma}_i^{Sj}(R_k,m) = \Gamma^{Sj}(R_k,S_b^i(m),m) = \Gamma(R_k,S_b^i(m),m,Sj(S_b^i(m,k)))$$

On a traité jusqu'ici le cas l'alphabet utilisé par le système est binaire, c'est-à-dire $M = 2$. On va maintenant traiter le cas où il est quaternaire et où donc $M = 4$. Chaque symbole $d_k$ est alors un élément complexe que l'on peut écrire sous la forme :

$$d_k = a_k + jb_k \text{ avec } \{a_k,b_k\} \in \{-1,1\}^2$$

Les décisions douces pour chacune des composantes de cet élément complexe $d_k$ peuvent alors s'écrire :

$$\Lambda(a_k) = Log\frac{\Pr(a_k = -1/observation)}{\Pr(a_k = 1/observation)}$$

$$\Lambda(b_k) = Log\frac{\Pr(b_k = -1/observation)}{\Pr(b_k = 1/observation)}$$

Si l'on suppose que le symbole $i$ est défini de la manière suivante :

*0* correspond à $\{a_k,b_k\}=\{1,1\}$
*1* correspond à $\{a_k,b_k\}=\{1,-1\}$
*2* correspond à $\{a_k,b_k\}=\{-1,1\}$
*3* correspond à $\{a_k,b_k\} = \{-1,-1\}$

et que l'on remarque que les valeurs $i = 0$ et $i = 1$ sont les valeurs pour lesquelles $a_k$ est égal à 1 et que les valeurs $i = 2$ et $i = 3$ sont les valeurs pour lesquelles $a_k$ est égal à la valeur complémentaire -1, on peut écrire, conformément à l'équation générale 1 ci-dessus, la décision souple concernant la composante $a_k$ de la manière suivante :

$$\Lambda(a_k) = Log\frac{\sum_{m=1}^{4^{J-1}}\sum_{j=0}^{N-1}\alpha_k^{Sj}(m)\gamma_0^{Sj}(R_k,m)\beta_{k+1}(S_f^0(m)) + \sum_{m=1}^{4^{L-1}}\sum_{j=0}^{N-1}\alpha_k^{Sj}(m)\gamma_1^{Sj}(R_k,m)\beta_{k+1}(S_f^1(m))}{\sum_{m=1}^{4^{J-1}}\sum_{j=0}^{N-1}\alpha_k^{Sj}(m)\gamma_2^{Sj}(R_k,m)\beta_{k+1}(S_f^2(m)) + \sum_{m=1}^{4^{J-1}}\sum_{j=0}^{N-1}\alpha_k^{Sj}(m)\gamma_3^{Sj}(R_k,m)\beta_{k+1}(S_f^3(m))}$$

De même, si l'on note que les valeurs $i = 0$ et $i = 2$ sont les valeurs pour lesquelles $b_k$ est égal à 1 et que les valeurs $i = 1$ et $i = 3$ sont les valeurs pour lesquelles $b_k$ est égal à la valeur complémentaire -1, on peut écrire, conformément à l'équation générale 1 ci-dessus, la décision souple concernant la composante $b_k$ de la manière suivante :

$$\Lambda(b_k) = Log\frac{\sum_{m=1}^{4^{L-1}}\sum_{j=0}^{N-1}\alpha_k^{Sj}(m)\gamma_0^{Sj}(R_k,m)\beta_{k+1}(S_f^0(m)) + \sum_{m=1}^{4^{J-1}}\sum_{j=0}^{N-1}\alpha_k^{Sj}(m)\gamma_2^{Sj}(R_k,m)\beta_{k+1}(S_f^2(m))}{\sum_{m=1}^{4^{J-1}}\sum_{j=0}^{N-1}\alpha_k^{Sj}(m)\gamma_1^{Sj}(R_k,m)\beta_{k+1}(S_f^1(m)) + \sum_{m=1}^{4^{J-1}}\sum_{j=0}^{N-1}\alpha_k^{Sj}(m)\gamma_3^{Sj}(R_k,m)\beta_{k+1}(S_f^3(m))}$$

Si on le faisait conformément à l'équation Eq 2 ci-dessus, ces décisions souples pourraient alors s'écrire :

$$\Lambda(a_k) = Log \frac{\sum_{m=1}^{4^{J-1}}\sum_{j=0}^{N-1}\alpha_k^{Sj}(m)\gamma_0^{Sj}(R_k,m) + \sum_{m=1}^{4^{J-1}}\sum_{j=0}^{N-1}\alpha_k^{Sj}(m)\gamma_1^{Sj}(R_k,m)}{\sum_{m=1}^{4^{J-1}}\sum_{j=0}^{N-1}\alpha_k^{Sj}(m)\gamma_2^{Sj}(R_k,m) + 4\sum_{m=1}^{2^{J-1}}\sum_{j=0}^{N-1}\alpha_k^{Sj}(m)\gamma_3^{Sj}(R_k,m)} \quad \text{et,}$$

$$\Lambda(b_k) = Log \frac{\sum_{m=1}^{4^{J-1}}\sum_{j=0}^{N-1}\alpha_k^{Sj}(m)\gamma_0^{Sj}(R_k,m) + \sum_{m=1}^{4^{J-1}}\sum_{j=0}^{N-1}\alpha_k^{Sj}(m)\gamma_2^{Sj}(R_k,m)}{\sum_{m=1}^{4^{J-1}}\sum_{j=0}^{N-1}\alpha_k^{Sj}(m)\gamma_1^{Sj}(R_k,m) + 4\sum_{m=1}^{2^{J-1}}\sum_{j=0}^{N-1}\alpha_k^{Sj}(m)\gamma_3^{Sj}(R_k,m)}$$

Si on le faisait conformément à l'équation Eq 3 ci-dessus, ces décisions souples pourraient alors s'écrire :

$$\Lambda(a_{k-J+1}) = Log \frac{\sum_{m=1}^{4^{J-1}}\sum_{j=0}^{N-1}\alpha_k^{Sj}(S_b^0(m))\widetilde{\gamma}_0^{Sj}(R_k,m)\beta_{k+1}(m) + \sum_{m=1}^{4^{J-1}}\sum_{j=0}^{N-1}\alpha_k^{Sj}(S_b^1(m))\widetilde{\gamma}_1^{Sj}(R_k,m)\beta_{k+1}(m)}{\sum_{m=1}^{4^{J-1}}\sum_{j=0}^{N-1}\alpha_k^{Sj}(S_b^2(m))\widetilde{\gamma}_2^{Sj}(R_k,m)\beta_{k+1}(m) + \sum_{m=1}^{4^{J-1}}\sum_{j=0}^{N-1}\alpha_k^{Sj}(S_b^3(m))\widetilde{\gamma}_3^{Sj}(R_k,m)\beta_{k+1}(m)}$$

$$\Lambda(b_{k-J+1}) = Log \frac{\sum_{m=1}^{4^{J-1}}\sum_{j=0}^{N-1}\alpha_k^{Sj}(S_b^0(m))\widetilde{\gamma}_0^{Sj}(R_k,m)\beta_{k+1}(m) + \sum_{m=1}^{4^{J-1}}\sum_{j=0}^{N-1}\alpha_k^{Sj}(S_b^2(m))\widetilde{\gamma}_2^{Sj}(R_k,m)\beta_{k+1}(m)}{\sum_{m=1}^{4^{J-1}}\sum_{j=0}^{N-1}\alpha_k^{Sj}(S_b^1(m))\widetilde{\gamma}_1^{Sj}(R_k,m)\beta_{k+1}(m) + \sum_{m=1}^{4^{J-1}}\sum_{j=0}^{N-1}\alpha_k^{Sj}(S_b^3(m))\widetilde{\gamma}_3^{Sj}(R_k,m)\beta_{k+1}(m)}$$

Si on le faisait conformément à l'équation Eq 4 ci-dessus, ces décisions souples pourraient alors s'écrire :

$$\Lambda(a_{k-J+1}) = Log \frac{\sum_{m=1}^{4^{J-1}}\sum_{j=0}^{N-1}\alpha_k^{Sj}(S_b^0(m))\widetilde{\gamma}_0^{Sj}(R_k,m) + \sum_{m=1}^{4^{J-1}}\sum_{j=0}^{N-1}\alpha_k^{Sj}(S_b^1(m))\widetilde{\gamma}_1^{Sj}(R_k,m)}{\sum_{m=1}^{4^{J-1}}\sum_{j=0}^{N-1}\alpha_k^{Sj}(S_b^2(m))\widetilde{\gamma}_2^{Sj}(R_k,m) + \sum_{m=1}^{4^{J-1}}\sum_{j=0}^{N-1}\alpha_k^{Sj}(S_b^3(m))\widetilde{\gamma}_3^{Sj}(R_k,m)}$$

$$\Lambda(b_{k-J+1}) = Log \frac{\sum_{m=1}^{4^{J-1}}\sum_{j=0}^{N-1}\alpha_k^{Sj}(S_b^0(m))\widetilde{\gamma}_0^{Sj}(R_k,m) + \sum_{m=1}^{4^{J-1}}\sum_{j=0}^{N-1}\alpha_k^{Sj}(S_b^2(m))\widetilde{\gamma}_2^{Sj}(R_k,m)}{\sum_{m=1}^{4^{J-1}}\sum_{j=0}^{N-1}\alpha_k^{Sj}(S_b^1(m))\widetilde{\gamma}_1^{Sj}(R_k,m) + \sum_{m=1}^{4^{J-1}}\sum_{j=0}^{N-1}\alpha_k^{Sj}(S_b^3(m))\widetilde{\gamma}_3^{Sj}(R_k,m)}$$

Si on le faisait conformément à l'équation Eq 5 ci-dessus, ces décisions souples pourraient alors s'écrire :

$$\Lambda(a_k) = \mathop{E}_{m=1}^{4^{J-1}} \mathop{E}_{j=0}^{N-1} \left[ \mathop{E}_{x \in \{0,1\}} \left( \alpha_k^{Sj}(m) + \Gamma_x^{Sj}(R_k,m) \right) + \beta_{k+1}(S_f^x(m)) \right]$$

$$- \mathop{E}_{m=1}^{4^{J-1}} \mathop{E}_{j=0}^{N-1} \left[ \mathop{E}_{x \in \{2,3\}} \left( \alpha_k^{Sj}(m) + \Gamma_x^{Sj}(R_k,m) \right) + \beta_{k+1}(S_f^x(m)) \right]$$

$$\Lambda(b_k) = \mathop{E}_{m=1}^{4^{J-1}} \mathop{E}_{j=0}^{N-1} \left[ \mathop{E}_{x \in \{0,2\}} \left( \alpha_k^{Sj}(m) + \Gamma_x^{Sj}(R_k,m) \right) + \beta_{k+1}(S_f^x(m)) \right]$$

$$- \mathop{E}_{m=1}^{4^{J-1}} \mathop{E}_{j=0}^{N-1} \left[ \mathop{E}_{x \in \{1,3\}} \left( \alpha_k^{Sj}(m) + \Gamma_x^{Sj}(R_k,m) \right) + \beta_{k+1}(S_f^x(m)) \right]$$

Si on le faisait conformément à l'équation Eq 6 ci-dessus, ces décisions souples pourraient alors s'écrire :

$$\Lambda(a_k) = \mathop{E}_{m=1}^{4^{J-1}} \mathop{E}_{j=0}^{N-1} \left[ \mathop{E}_{x \in \{0,1\}} \left( \alpha_k^{Sj}(m) + \Gamma_x^{Sj}(R_k,m) \right) \right] - \mathop{E}_{m=1}^{4^{J-1}} \mathop{E}_{j=0}^{N-1} \left[ \mathop{E}_{x \in \{2,3\}} \left( \alpha_k^{Sj}(m) + \Gamma_x^{Sj}(R_k,m) \right) \right]$$

$$\Lambda(b_k) = \mathop{E}_{m=1}^{4^{J-1}} \mathop{E}_{j=0}^{N-1} \left[ \mathop{E}_{x \in \{0,2\}} \left( \alpha_k^{Sj}(m) + \Gamma_x^{Sj}(R_k,m) \right) \right] - \mathop{E}_{m=1}^{4^{J-1}} \mathop{E}_{j=0}^{N-1} \left[ \mathop{E}_{x \in \{1,3\}} \left( \alpha_k^{Sj}(m) + \Gamma_x^{Sj}(R_k,m) \right) \right]$$

Si on le faisait conformément à l'équation Eq 7 ci-dessus, ces décisions souples pourraient alors s'écrire :

$$\Lambda(a_{k-J+1}) = \mathop{E}_{m=1}^{4^{J-1}} \mathop{E}_{j=0}^{N-1} \left[ \mathop{E}_{x \in \{0,1\}} \left( \alpha_k^{Sj}(S_b^x(m)) + \widetilde{\Gamma}_x^{Sj}(R_k,m) + \beta_{k+1}(m) \right) \right]$$

$$- \mathop{E}_{m=1}^{4^{J-1}} \mathop{E}_{j=0}^{N-1} \left[ \mathop{E}_{x \in \{2,3\}} \left( \alpha_k^{Sj}(S_b^x(m)) + \widetilde{\Gamma}_x^{Sj}(R_k,m) + \beta_{k+1}(m) \right) \right]$$

$$\Lambda(b_{k-J+1}) = \mathop{E}_{m=1}^{4^{J-1}} \mathop{E}_{j=0}^{N-1} \left[ \mathop{E}_{x \in \{0,2\}} \left( \alpha_k^{Sj}(S_b^x(m)) + \widetilde{\Gamma}_x^{Sj}(R_k,m) + \beta_{k+1}(m) \right) \right]$$

$$- \mathop{E}_{m=1}^{4^{J-1}} \mathop{E}_{j=0}^{N-1} \left[ \mathop{E}_{x \in \{1,3\}} \left( \alpha_k^{Sj}(S_b^x(m)) + \widetilde{\Gamma}_x^{Sj}(R_k,m) + \beta_{k+1}(m) \right) \right]$$

Si on le faisait conformément à l'équation Eq 8 ci-dessus, ces décisions souples pourraient alors s'écrire :

$$\Lambda\big(a_{k-J+1}\big) = \mathop{E}_{m=1}^{4^{J-1}}\mathop{E}_{j=0}^{N-1}\left[\mathop{E}_{x\in\{0,1\}}\big(\alpha_k^{Sj}(S_b^x(m)) + \widetilde{\Gamma}_x^{Sj}(R_k,m)\big)\right] - \mathop{E}_{m=1}^{4^{J-1}}\mathop{E}_{j=0}^{N-1}\left[\mathop{E}_{x\in\{2,3\}}\big(\alpha_k^{Sj}(S_b^x(m)) + \widetilde{\Gamma}_x^{Sj}(R_k,m)\big)\right]$$

$$\Lambda\big(b_{k-J+1}\big) = \mathop{E}_{m=1}^{4^{J-1}}\mathop{E}_{j=0}^{N-1}\left[\mathop{E}_{x\in\{0,2\}}\big(\alpha_k^{Sj}(S_b^x(m)) + \widetilde{\Gamma}_x^{Sj}(R_k,m)\big)\right] - \mathop{E}_{m=1}^{4^{J-1}}\mathop{E}_{j=0}^{N-1}\left[\mathop{E}_{x\in\{1,3\}}\big(\alpha_k^{Sj}(S_b^x(m)) + \widetilde{\Gamma}_x^{Sj}(R_k,m)\big)\right]$$

A l'aide de ces deux exemples de ré-écriture des équations générales pour $M = 2$ vers des équations générales pour $M = 4$, l'homme du métier pourra reconstruire tous les autres cas de figure, notamment pour $M$ quelconque.

**Revendications**

1.   Procédé d'égalisation d'un canal destiné à être mis en oeuvre dans un récepteur d'un système de télécommunication en communication avec un émetteur via ledit canal, ledit émetteur émettant à des instants $k$ des symboles, ledit canal pouvant être représenté par un treillis constitué, pour chaque instant $k$, d'un nombre limité d'états et de branches reliant respectivement chaque état d'un instant à des états de l'instant suivant, ledit procédé consistant à prendre pour chaque instant $k$ une décision quant à la valeur du symbole qui été émis à cet instant $k$ en ne qu'un nombre limité d'états dudit canal correspondant à un nombre limité de symboles recus les plus récents, caractérisé en ce qu'il consiste à considérer, pour chaque état $m$ présent, d'une part, une liste de suites d'états consécutifs dudit treillis antérieurs audit état présentement considéré, dits survivants, et, d'autre part, une liste des métriques d'état avant à l'instant présent, et à rendre ladite décision en tenant compte desdites listes pour tous les états présents dudit treillis.

2.   Procédé d'égalisation d'un canal selon la revendication 1, caractérisé en ce que ladite décision dépend des métriques des branches qui conduisent des états antérieurs audit état présent, chaque métrique de branche étant fonction des survivants dudit état antérieur correspondant.

3.   Procédé d'égalisation d'un canal selon la revendication 2, caractérisé en ce que pour déterminer ladite liste de métriques avant d'un état $m$ au temps $k$, on procède de la manière récursive suivante :

on détermine la métrique cumulée de chacun des chemins qui convergent, audit temps présent, vers l'état considéré, chaque valeur de métrique cumulée étant égale au cumul, pour le survivant considéré, de la métrique avant de l'état antérieur et de la métrique de la branche qui conduit de l'état antérieur considéré à l'état présent,
on classe les valeurs de métrique cumulée desdits chemins par ordre décroissant et on classe de ce fait les survivants associés auxdits chemins,
on détermine pour chaque survivant ainsi classé la métrique d'état avant de l'état $m$ au temps $k$ par combinaison des métriques cumulées pour les tous survivants dont la métrique cumulée est inférieure ou égale à la métrique cumulée dudit survivant et
on ne garde, parmi toutes les valeurs de métrique d'état avant, que les $N$ premières valeurs qui forment alors la liste de métrique avant de l'état $m$ au temps $k$

4.   Procédé d'égalisation d'un canal selon la revendication 3, caractérisé en ce que la décision concernant le symbole ou la composante du symbole normalement émis au temps $k$ est une fonction du cumul, pour tous les états $m$ du canal, pour tous les survivants $S_n$ considérés et pour la valeur i du symbole égale à une première valeur ou pour toutes les valeurs i de ladite composante du symbole égales à un premier ensemble de valeurs, pour un survivant $S_j$, de la métrique avant $\alpha_k^{Sj}(m)$ d'un état du canal $m$ au temps présent $k$ et de la métrique de la branche qui conduit, pour une donnée reçue égale à $R_k$, dudit état $m$ du canal à l'état suivant $S_f^i(m)$ ainsi que du cumul, pour tous les états $m$ du canal, pour tous les survivants $S_n$ considérés et pour la valeur i du symbole égale à une seconde valeur ou pour toutes les valeurs i de ladite composante du symbole égales à un second ensemble de valeurs complémentaires de la première valeur ou dudit premier ensemble de valeurs, pour un survivant $S_j$, de la métrique avant $\alpha_k^{Sj}(m)$ d'un état du canal $m$ au temps présent $k$ et de la métrique de la branche qui conduit, pour une donnée reçue égale à $R_k$, dudit état $m$ du canal à l'état suivant $S_f^i(m)$.

**5.** Procédé d'égalisation d'un canal selon la revendication 4, caractérisé en ce que ladite fonction est le logarithme à base 10 du rapport desdits deux cumuls, chacun des deux cumuls étant égal à la somme, pour tous les états $m$ du canal, pour tous les survivants $S_n$ considérés et pour la valeur du symbole d'entrée ou de la composante du symbole d'entrée égale à i, du produit, pour un survivant $S_j$, de la métrique avant $\alpha_k^{S_j}(m)$ d'un état du canal $m$ au temps présent $k$ et de la métrique $\gamma(R_k,m,S_f^i(m),S_j)$ de la branche qui conduit, pour une donnée reçue égale à $R_k$, dudit état $m$ du canal à l'état suivant $S_f^i(m)$ si le symbole d'entrée est i, si bien que l'on peut écrire, pour la dimension de l'alphabet utilisé $M$ égale à 2 :

$$\Lambda(d_k) = Log \frac{\sum_{m=1}^{2^{J-1}} \sum_{j=0}^{N-1} \alpha_k^{S_j}(m)\gamma_1^{S_j}(R_k,m)}{\sum_{m=1}^{2^{J-1}} \sum_{j=0}^{N-1} \alpha_k^{S_j}(m)\gamma_0^{S_j}(R_k,m)}$$

en notant la métrique de branche $\gamma(Rk,m,S_f^i(m),S_j) = \gamma_i^{S_j}(R_k,m)$
et, pour la dimension de l'alphabet utilisé $M$ égale à 4 :

$$\Lambda(a_k) = Log \frac{\sum_{m=1}^{4^{J-1}} \sum_{j=0}^{N-1} \alpha_k^{S_j}(m)\gamma_0^{S_j}(R_k,m) + \sum_{m=1}^{4^{J-1}} \sum_{j=0}^{N-1} \alpha_k^{S_j}(m)\gamma_1^{S_j}(R_k,m)}{\sum_{m=1}^{4^{J-1}} \sum_{j=0}^{N-1} \alpha_k^{S_j}(m)\gamma_2^{S_j}(R_k,m) + 4\sum_{m=1}^{2^{J-1}} \sum_{j=0}^{N-1} \alpha_k^{S_j}(m)\gamma_3^{S_j}(R_k,m)} \text{ et,}$$

$$\Lambda(b_k) = Log \frac{\sum_{m=1}^{4^{J-1}} \sum_{j=0}^{N-1} \alpha_k^{S_j}(m)\gamma_0^{S_j}(R_k,m) + \sum_{m=1}^{4^{J-1}} \sum_{j=0}^{N-1} \alpha_k^{S_j}(m)\gamma_2^{S_j}(R_k,m)}{\sum_{m=1}^{4^{J-1}} \sum_{j=0}^{N-1} \alpha_k^{S_j}(m)\gamma_1^{S_j}(R_k,m) + 4\sum_{m=1}^{2^{J-1}} \sum_{j=0}^{N-1} \alpha_k^{S_j}(m)\gamma_3^{S_j}(R_k,m)}$$

avec $d_k = a_k + j\, b_k$.

**6.** Procédé d'égalisation d'un canal selon la revendication 4, caractérisé en ce que ladite fonction est la différence desdits deux cumuls, chacun des deux cumuls étant égal à une fonction E, pour tous les états $m$ du canal, pour tous les survivants $S_n$ considérés et pour la valeur du symbole d'entrée ou de la composante du symbole d'entrée égale à i, de la somme, pour un survivant $S_j$, de la métrique avant $\alpha_k^{S_j}(m)$ d'un état du canal $m$ au temps présent $k$ et de la métrique $\Gamma(R_k,m,S_f^i(m),S_j)$ de la branche qui conduit, pour une donnée reçue égale à $R_k$, dudit état $m$ du canal à l'état suivant $S_f^i(m)$ si le symbole d'entrée est i, si bien que l'on peut écrire, pour la dimension de l'alphabet utilisé $M$ égale à 2 : :

$$\Lambda(d_k) = \mathop{E}_{m=1}^{2^{J-1}} \mathop{E}_{j=0}^{N-1} \left[\alpha_k^{S_j}(m) + \Gamma_1^{S_j}(R_k,m)\right] - \mathop{E}_{m=1}^{2^{J-1}} \mathop{E}_{j=0}^{N-1} \left[\alpha_k^{S_j}(m) + \Gamma_0^{S_j}(R_k,m)\right]$$

en notant la métrique de branche $\Gamma(R_k,m,S_f^i(m),S_j) = \Gamma_i^{S_j}(R_k,m)$,
et, pour la dimension de l'alphabet utilisé $M$ égale à 4 :

$$\Lambda(a_k) = \mathop{E}_{m=1}^{4^{J-1}} \mathop{E}_{j=0}^{N-1}\left[\mathop{E}_{x\in\{0,1\}}\left(\alpha_k^{Sj}(m) + \Gamma_x^{Sj}(R_k,m))\right)\right] - \mathop{E}_{m=1}^{4^{J-1}} \mathop{E}_{j=0}^{N-1}\left[\mathop{E}_{x\in\{2,3\}}\left(\alpha_k^{Sj}(m) + \Gamma_x^{Sj}(R_k,m))\right)\right]$$

$$\Lambda(b_k) = \mathop{E}_{m=1}^{4^{J-1}} \mathop{E}_{j=0}^{N-1}\left[\mathop{E}_{x\in\{0,2\}}\left(\alpha_k^{Sj}(m) + \Gamma_x^{Sj}(R_k,m))\right)\right] - \mathop{E}_{m=1}^{4^{J-1}} \mathop{E}_{j=0}^{N-1}\left[\mathop{E}_{x\in\{1,3\}}\left(\alpha_k^{Sj}(m) + \Gamma_x^{Sj}(R_k,m))\right)\right]$$

**7.** Procédé d'égalisation d'un canal selon la revendication 3, caractérisé en ce que la décision concernant le symbole normalement émis à un temps $k$-$J$+ 1 antérieur au temps présent de la longueur réduite du canal moins un est une fonction du cumul, pour tous les états $m$ du canal, pour tous les survivants $S_n$ considérés et pour la valeur i du symbole égale à une première valeur ou pour toutes les valeurs i de ladite composante du symbole égales à un premier ensemble de valeurs, pour un survivant $S_j$, de la métrique avant $\alpha_k^{S_j}(S_b^i(m))$ d'un état précédent $S_b^i$ ($m$) à un état présent au temps présent $k$ et de la métrique de la branche qui conduit, pour une donnée reçue égale à $R_k$, dudit état antérieur $S_b^i(m)$ à l'état présent ainsi que du cumul, pour tous les états $m$ du canal, pour tous les survivants $S_n$ considérés et pour la valeur i du symbole égale à une seconde valeur ou pour toutes les valeurs i de ladite composante du symbole égales à un second ensemble de valeurs complémentaires de la première valeur ou dudit premier ensemble de valeurs, pour un survivant $S_j$, de la métrique avant $\alpha_k^{S_j}(S_b^i(m))$ d'un état précédent $S_b^i(m)$ à un état présent au temps présent $k$ et de la métrique de la branche qui conduit, pour une donnée reçue égale à $R_k$, dudit état antérieur $S_b^i(m)$ à l'état présent.

**8.** Procédé d'égalisation d'un canal selon la revendication 7, caractérisé en ce que ladite fonction est le logarithme à base 10 du rapport desdits deux cumuls, chacun des deux cumuls étant égal à la somme, pour tous les états $m$ du canal, pour tous les survivants $S_n$ considérés et pour la valeur du symbole d'entrée ou de la composante du symbole d'entrée égale à i, du produit, pour un survivant $S_j$, de la métrique avant $\alpha_k^{S_j}(S_b^i(m))$ d'un état précédent $S_b^i(m)$ à un état présent au temps présent $k$ et pour un symbole de sortie égal à i et de la métrique $\gamma(R_k,S_b^i(m),m,S_j)$ de la branche qui conduit, pour une donnée reçue égale à $R_k$, dudit état antérieur $S_b^i(m)$ à l'état présent, si bien que l'on peut écrire, pour la dimension de l'alphabet utilisé M égale à 2 :

$$\Lambda(d_{k-J+1}) = Log\frac{\displaystyle\sum_{m=1}^{2^{J-1}}\sum_{j=0}^{N-1}\alpha_k^{Sj}(S_b^1(m))\widetilde{\gamma}_1^{Sj}(R_k,m)}{\displaystyle\sum_{m=1}^{2^{J-1}}\sum_{j=0}^{N-1}\alpha_k^{Sj}(S_b^0(m))\widetilde{\gamma}_0^{Sj}(R_k,m)}$$

en notant la métrique de branche $\gamma(R_k,S_b^i(m),m,S_j) = \widetilde{\gamma}_i^{Sj}(R_k,m)$ et pour la dimension de l'alphabet utilisé $M$ égale à 4 :

$$\Lambda(a_{k-J+1}) = Log\frac{\displaystyle\sum_{m=1}^{4^{J-1}}\sum_{j=0}^{N-1}\alpha_k^{Sj}(S_b^0(m))\widetilde{\gamma}_0^{Sj}(R_k,m) + \sum_{m=1}^{4^{J-1}}\sum_{j=0}^{N-1}\alpha_k^{Sj}(S_b^1(m))\widetilde{\gamma}_1^{Sj}(R_k,m)}{\displaystyle\sum_{m=1}^{4^{J-1}}\sum_{j=0}^{N-1}\alpha_k^{Sj}(S_b^2(m))\widetilde{\gamma}_2^{Sj}(R_k,m) + \sum_{m=1}^{4^{J-1}}\sum_{j=0}^{N-1}\alpha_k^{Sj}(S_b^3(m))\widetilde{\gamma}_3^{Sj}(R_k,m)}$$

$$\Lambda\left(b_{k-J+1}\right) = Log \frac{\sum_{m=1}^{4^{J-1}}\sum_{j=0}^{N-1}\alpha_k^{Sj}(S_b^0(m))\widetilde{\gamma}_0^{Sj}(R_k,m) + \sum_{m=1}^{4^{J-1}}\sum_{j=0}^{N-1}\alpha_k^{Sj}(S_b^2(m))\widetilde{\gamma}_2^{Sj}(R_k,m)}{\sum_{m=1}^{4^{J-1}}\sum_{j=0}^{N-1}\alpha_k^{Sj}(S_b^1(m))\widetilde{\gamma}_1^{Sj}(R_k,m) + \sum_{m=1}^{4^{J-1}}\sum_{j=0}^{N-1}\alpha_k^{Sj}(S_b^3(m))\widetilde{\gamma}_3^{Sj}(R_k,m)}$$

avec $d_k = a_k + j\, b_k$.

**9.** Procédé d'égalisation d'un canal selon la revendication 7, caractérisé en ce que ladite fonction est la différence desdits deux cumuls, chacun des deux cumuls étant égal à une fonction E, pour tous les états $m$ du cánal, pour tous les survivants $S_n$ considérés et pour la valeur du symbole d'entrée ou de la composante du symbole d'entrée égale à i, de la somme, pour un survivant $S_j$, de la métrique avant $\alpha_j^{S}(S_b^0(m))$ d'un état précédent $S_b^i(m)$ à un état présent au temps présent $k$ et pour un symbole de sortie égal à i et de la métrique $\Gamma(R_k, S_b^i(m), m, S_j)$ de la branche qui conduit, pour une donnée reçue égale à $R_k$, dudit état antérieur $S_b^i(m)$ à l'état présent, si bien que l'on peut écrire, pour la dimension de l'alphabet utilisé $M$ égale à 2 :

$$\Lambda\left(d_{k-J+1}\right) = \mathop{E}_{m=1}^{2^{J-1}}\mathop{E}_{j=0}^{N-1}\left[\alpha_k^{Si}(S_b^1(m)) + \widetilde{\Gamma}_1^{Si}(R_k,m)\right] - \mathop{E}_{m=1}^{2^{J-1}}\mathop{E}_{j=0}^{N-1}\left[\alpha_k^{Si}(S_b^0(m)) + \widetilde{\Gamma}_0^{Si}(R_k,m)\right]$$

en notant la métrique de branche $\Gamma(R_k, S_b^i(m), m, S_j) = \widetilde{\Gamma}_i^{Sj}(R_k, m)$ et, pour la dimension de l'alphabet utilisé $M$ égale à 4:

$$\Lambda\left(a_{k-J+1}\right) = \mathop{E}_{m=1}^{4^{J-1}}\mathop{E}_{j=0}^{N-1}\left[\mathop{E}_{x\in\{0,1\}}\left(\alpha_k^{Sj}(S_b^x(m)) + \widetilde{\Gamma}_x^{Sj}(R_k,m)\right)\right] - \mathop{E}_{m=1}^{4^{J-1}}\mathop{E}_{j=0}^{N-1}\left[\mathop{E}_{x\in\{2,3\}}\left(\alpha_k^{Sj}(S_b^x(m)) + \widetilde{\Gamma}_x^{Sj}(R_k,m)\right)\right]$$

$$\Lambda\left(b_{k-J+1}\right) = \mathop{E}_{m=1}^{4^{J-1}}\mathop{E}_{j=0}^{N-1}\left[\mathop{E}_{x\in\{0,2\}}\left(\alpha_k^{Sj}(S_b^x(m)) + \widetilde{\Gamma}_x^{Sj}(R_k,m)\right)\right] - \mathop{E}_{m=1}^{4^{J-1}}\mathop{E}_{j=0}^{N-1}\left[\mathop{E}_{x\in\{1,3\}}\left(\alpha_k^{Sj}(S_b^x(m)) + \widetilde{\Gamma}_x^{Sj}(R_k,m)\right)\right]$$

**10.** Procédé d'égalisation d'un canal selon une des revendications 1 à 3, caractérisé en ce que ladite décision pour un instant $k$ dépend de la métrique arrière à l'instant suivant $k+1$ de l'état suivant considéré pour un symbole entrant donné.

**11.** Procédé d'égalisation d'un canal selon la revendication 10, caractérisé en ce que pour calculer ladite métrique arrière d'un état $m$ au temps $k$, on procède de manière itérative par combinaison des cumuls des métriques arrière de tous les états suivants au temps suivant $k+1$ et de toutes les métriques de branches conduisant dudit état $m$ à l'état suivant considéré pour la liste de survivants dudit état $m$ au temps $k$.

**12.** Procédé d'égalisation d'un canal selon la revendication 10 ou 11, caractérisé en ce que la décision concernant le symbole normalement émis au temps $k$ est une fonction du cumul, pour tous les états $m$ du canal, pour tous les survivants $S_n$ considérés et pour la valeur du symbole ou pour la valeur i du symbole égale à une première valeur ou pour toutes les valeurs i de ladite composante du symbole égales à un premier ensemble de valeurs, pour un survivant $S_j$, de la métrique avant $\alpha_k^{S_j}(m)$ d'un état du canal $m$ au temps présent $k$, de la métrique de la branche qui conduit, pour une donnée reçue égale à $R_k$, dudit état $m$ du canal à l'état suivant $S_f^i(m)$ et de la métrique arrière $\beta_{k+1}(S_f^i(m))$ au temps suivant le temps présent $k$ de l'état suivant $S_f^i(m)$ ainsi que du cumul, pour tous les états $m$ du canal, pour tous les survivants $S_n$ considérés et pour la valeur i du symbole égale à une seconde valeur ou pour toutes les valeurs i de ladite composante du symbole égales à un second ensemble de valeurs complémentaires de la première valeur ou dudit premier ensemble de valeurs, pour un survivant $S_j$, de la métrique avant $\alpha_k^{S_j}(m)$ d'un état du canal $m$ au temps présent $k$, de la métrique de la branche qui conduit, pour une donnée reçue égale à $R_k$, dudit état $m$ du canal à l'état suivant $S_f^i(m)$ et de la métrique arrière $\beta_{k+1}(S_f^i(m))$ au temps suivant le temps présent $k$ de l'état suivant $S_f^i(m)$.

13. Procédé d'égalisation d'un canal selon la revendication 12, caractérisé en ce que ladite fonction est le logarithme à base 10 du rapport desdits deux cumuls, chacun des deux cumuls étant égal à la somme, pour tous les états $m$ du canal, pour tous les survivants $S_n$ considérés et pour la valeur du symbole d'entrée ou de la composante du symbole d'entrée égale à i, du produit, pour un survivant $S_j$, de la métrique avant $\alpha_k^{S_j}(m)$ d'un état du canal $m$ au temps présent $k$ et de la métrique $\gamma(R_k,m,S_f^i(m),S_j)$ de la branche qui conduit, pour une donnée reçue égale à $R_k$, dudit état $m$ du canal à l'état suivant $S_f^i(m)$ si le symbole d'entrée est i et de la métrique arrière $\beta_{k+1}(S_f^i(m))$ au temps suivant le temps présent $k$ de l'état suivant $S_f^i(m)$, si bien que l'on peut écrire, pour la dimension de l'alphabet utilisé $M$ égale à 2, :

$$\Lambda(d_k) = Log \frac{\displaystyle\sum_{m=1}^{2^{J-1}}\sum_{j=0}^{N-1} \alpha_k^{S_j}(m)\gamma_1^{S_j}(R_k,m)\beta_{k+1}(S_f^1(m))}{\displaystyle\sum_{m=1}^{2^{J-1}}\sum_{j=0}^{N-1} \alpha_k^{S_j}(m)\gamma_0^{S_j}(R_k,m)\beta_{k+1}(S_f^0(m))}$$

en notant la métrique de branche $\gamma(R_k,m,S_f^i(m),S_j) = \gamma_i^{S_j}(R_k,m)$ et pour la dimension de l'alphabet utilisé $M$ égale à 4 :

$$\Lambda(a_k) = Log \frac{\displaystyle\sum_{m=1}^{4^{J-1}}\sum_{j=0}^{N-1} \alpha_k^{S_j}(m)\gamma_0^{S_j}(R_k,m)\beta_{k+1}(S_f^0(m)) + \sum_{m=1}^{4^{L-1}}\sum_{j=0}^{N-1} \alpha_k^{S_j}(m)\gamma_1^{S_j}(R_k,m)\beta_{k+1}(S_f^1(m))}{\displaystyle\sum_{m=1}^{4^{J-1}}\sum_{j=0}^{N-1} \alpha_k^{S_j}(m)\gamma_2^{S_j}(R_k,m)\beta_{k+1}(S_f^2(m)) + \sum_{m=1}^{4^{J-1}}\sum_{j=0}^{N-1} \alpha_k^{S_j}(m)\gamma_3^{S_j}(R_k,m)\beta_{k+1}(S_f^3(m))}$$

$$\Lambda(b_k) = Log \frac{\displaystyle\sum_{m=1}^{4^{L-1}}\sum_{j=0}^{N-1} \alpha_k^{S_j}(m)\gamma_0^{S_j}(R_k,m)\beta_{k+1}(S_f^0(m)) + \sum_{m=1}^{4^{J-1}}\sum_{j=0}^{N-1} \alpha_k^{S_j}(m)\gamma_2^{S_j}(R_k,m)\beta_{k+1}(S_f^2(m))}{\displaystyle\sum_{m=1}^{4^{J-1}}\sum_{j=0}^{N-1} \alpha_k^{S_j}(m)\gamma_1^{S_j}(R_k,m)\beta_{k+1}(S_f^1(m)) + \sum_{m=1}^{4^{J-1}}\sum_{j=0}^{N-1} \alpha_k^{S_j}(m)\gamma_3^{S_j}(R_k,m)\beta_{k+1}(S_f^3(m))}$$

avec $d_k = a_k + j\, b_k$.

14. Procédé d'égalisation d'un canal selon la revendication 12, caractérisé en ce que ladite fonction est la différence desdits deux cumuls, chacun des deux cumuls étant égal à une fonction E, pour tous les états $m$ du canal, pour tous les survivants $S_n$ considérés et pour la valeur du symbole d'entrée ou de la composante du symbole d'entrée égale à i, de la somme, pour un survivant $S_j$, de la métrique avant $\alpha_k^{S_j}(m)$ d'un état du canal $m$ au temps présent $k$ et de la métrique $\gamma(R_k,m,S_f^i(m),S_j)$ de la branche qui conduit, pour une donnée reçue égale à $R_k$, dudit état $m$ du canal à l'état suivant $S_f^i(m)$ si le symbole d'entrée est i et de la métrique arrière $\beta_{k+1}(S_f^i(m))$ au temps suivant le temps présent $k$ de l'état suivant $S_f^i(m)$, si bien que l'on peut écrire, pour la dimension de l'alphabet utilisé $M$ égale à 2 :

$$\Lambda(d_k) = \mathop{E}_{m=1}^{2^{J-1}}\mathop{E}_{j=0}^{N-1}\left[\alpha_k^{S_j}(m) + \Gamma_1^{S_j}(R_k,m) + \beta_{k+1}(S_f^1(m))\right] - \mathop{E}_{m=1}^{2^{J-1}}\mathop{E}_{j=0}^{N-1}\left[\alpha_k^{S_j}(m) + \Gamma_0^{S_j}(R_k,m) + \beta_{k+1}(S_f^0(m))\right]$$

en notant la métrique de branche $\Gamma(R_k,m,S_f^i(m),S_j) = \Gamma_i^{S_j}(R_k,m)$ et, pour la dimension de l'alphabet utilisé $M$ égale à 4:

$$\Lambda(a_k) = \mathop{E}_{m=1}^{4^{J-1}} \mathop{E}_{j=0}^{N-1} \left[ \mathop{E}_{x \in \{0,1\}} \left( \alpha_k^{Sj}(m) + \Gamma_x^{Sj}(R_k,m) \right) + \beta_{k+1}(S_f^x(m)) \right]$$

$$- \mathop{E}_{m=1}^{4^{J-1}} \mathop{E}_{j=0}^{N-1} \left[ \mathop{E}_{x \in \{2,3\}} \left( \alpha_k^{Sj}(m) + \Gamma_x^{Sj}(R_k,m) \right) + \beta_{k+1}(S_f^x(m)) \right]$$

$$\Lambda(b_k) = \mathop{E}_{m=1}^{4^{J-1}} \mathop{E}_{j=0}^{N-1} \left[ \mathop{E}_{x \in \{0,2\}} \left( \alpha_k^{Sj}(m) + \Gamma_x^{Sj}(R_k,m) \right) + \beta_{k+1}(S_f^x(m)) \right]$$

$$- \mathop{E}_{m=1}^{4^{J-1}} \mathop{E}_{j=0}^{N-1} \left[ \mathop{E}_{x \in \{1,3\}} \left( \alpha_k^{Sj}(m) + \Gamma_x^{Sj}(R_k,m) \right) + \beta_{k+1}(S_f^x(m)) \right]$$

**15.** Procédé d'égalisation d'un canal selon la revendication 10 ou 11, caractérisé en ce que la décision concernant le symbole normalement émis à un temps $k$-$J$+ 1 antérieur au temps présent de la longueur réduite du canal moins un est une fonction du cumul, pour tous les états $m$ du canal, pour tous les survivants $S_n$ considérés et pour la valeur i du symbole égale à une première valeur ou pour toutes les valeurs i de ladite composante du symbole égales à un premier ensemble de valeurs, pour un survivant $S_j$, de la métrique avant $\alpha_k^{Sj}(S_b^i(m))$ d'un état précédent $S_b^i(m)$ à un état présent au temps présent $k$, de la métrique de la branche qui conduit, pour une donnée reçue égale à $R_k$, dudit état antérieur $S_b^i(m)$ à l'état présent et de la métrique arrière $\beta_{k+1}(m)$ de l'état présent $m$ au temps suivant $k$+ 1 ainsi que du cumul, pour tous les états $m$ du canal, pour tous les survivants $S_n$ considérés et pour la valeur i du symbole égale à une seconde valeur ou pour toutes les valeurs i de ladite composante du symbole égales à un second ensemble de valeurs complémentaires de la première valeur ou dudit premier ensemble de valeurs, pour un survivant $S_j$, de la métrique avant $\alpha_k^{Sj}(S_b^i(m))$ d'un état précédent $S_b^i(m)$ à un état présent au temps présent $k$, de la métrique de la branche qui conduit, pour une donnée reçue égale à $R_k$, dudit état antérieur $S_b^i(m)$ à l'état présent et de la métrique arrière $\beta_{k+1}(m)$ de l'état présent $m$ au temps suivant $k$+ 1 .

**16.** Procédé d'égalisation d'un canal selon la revendication 15, caractérisé en ce que ladite fonction est le logarithme à base 10 du rapport desdits deux cumuls, chacun des deux cumuls étant égal à la somme, pour tous les états $m$ du canal, pour tous les survivants $S_n$ considérés et pour la valeur du symbole d'entrée ou de la composante du symbole d'entrée égale à i, du produit, pour un survivant $S_j$, de la métrique avant $\alpha_k^{Sj}(S_b^i(m))$ d'un état précédent $S_b^i(m)$ à un état présent au temps présent $k$ et pour un symbole de sortie égal à $i$, de la métrique $\gamma(R_k,S_b^i(m),m,S_j)$ de la branche qui conduit, pour une donnée reçue égale à $R_k$, dudit état antérieur $S_b^i(m)$ à l'état présent et de la métrique arrière $\beta_{k+1}(m)$ de l'état présent $m$ au temps suivant $k$+ 1.si bien que l'on peut écrire, pour la dimension de l'alphabet utilisé $M$ égale à 2 :

$$\Lambda(d_{k-J+1}) = Log \frac{\displaystyle\sum_{m=1}^{2^{J-1}} \sum_{j=0}^{N-1} \alpha_k^{Sj}(S_b^1(m)) \widetilde{\gamma}_1^{Sj}(R_k,m) \beta_{k+1}(m)}{\displaystyle\sum_{m=1}^{2^{J-1}} \sum_{j=0}^{N-1} \alpha_k^{Sj}(S_b^0(m)) \widetilde{\gamma}_0^{Sj}(R_k,m) \beta_{k+1}(m)}$$

en notant la métrique de branche $\gamma(R_k,S_b^i(m),m,S_j) = \widetilde{\gamma}_i^{Sj}(R_k,m)$ et, pour la dimension de l'alphabet utilisé $M$ égale à 4 :

$$\Lambda(a_{k-J+1}) = Log \frac{\sum_{m=1}^{4^{J-1}}\sum_{j=0}^{N-1} \alpha_k^{Sj}(S_b^0(m))\widetilde{\gamma}_0^{Sj}(R_k,m)\beta_{k+1}(m) + \sum_{m=1}^{4^{J-1}}\sum_{j=0}^{N-1} \alpha_k^{Sj}(S_b^1(m))\widetilde{\gamma}_1^{Sj}(R_k,m)\beta_{k+1}(m)}{\sum_{m=1}^{4^{J-1}}\sum_{j=0}^{N-1} \alpha_k^{Sj}(S_b^2(m))\widetilde{\gamma}_2^{Sj}(R_k,m)\beta_{k+1}(m) + \sum_{m=1}^{4^{J-1}}\sum_{j=0}^{N-1} \alpha_k^{Sj}(S_b^3(m))\widetilde{\gamma}_3^{Sj}(R_k,m)\beta_{k+1}(m)}$$

$$\Lambda(b_{k-J+1}) = Log \frac{\sum_{m=1}^{4^{J-1}}\sum_{j=0}^{N-1} \alpha_k^{Sj}(S_b^0(m))\widetilde{\gamma}_0^{Sj}(R_k,m)\beta_{k+1}(m) + \sum_{m=1}^{4^{J-1}}\sum_{j=0}^{N-1} \alpha_k^{Sj}(S_b^2(m))\widetilde{\gamma}_2^{Sj}(R_k,m)\beta_{k+1}(m)}{\sum_{m=1}^{4^{J-1}}\sum_{j=0}^{N-1} \alpha_k^{Sj}(S_b^1(m))\widetilde{\gamma}_1^{Sj}(R_k,m)\beta_{k+1}(m) + \sum_{m=1}^{4^{J-1}}\sum_{j=0}^{N-1} \alpha_k^{Sj}(S_b^3(m))\widetilde{\gamma}_3^{Sj}(R_k,m)\beta_{k+1}(m)}$$

avec $d_k = a_k + j\, b_k$

**17.** Procédé d'égalisation d'un canal selon la revendication 15, caractérisé en ce que ladite fonction est la différence desdits deux cumuls, chacun des deux cumuls étant égal à une fonction E, pour tous les états $m$ du canal, pour tous les survivants $S_n$ considérés et pour la valeur du symbole d'entrée ou de la composante du symbole d'entrée égale à i, de la somme, pour un survivant $S_j$, de la métrique avant $\alpha_k^{S_j}(S_b^i(m))$ d'un état précédent $S_b^i(m)$ à un état présent au temps présent $k$ et pour un symbole de sortie égal à i, de la métrique $\Gamma(R_k,S_b^i(m),m,S_j)$ de la branche qui conduit, pour une donnée reçue égale à $R_k$, dudit état antérieur $S_b^i(m)$ à l'état présent et de la métrique arrière $\beta_{k+1}(m)$ de l'état présent $m$ au temps suivant $k+1$.si bien que l'on peut écrire, pour la dimension de l'alphabet utilisé $M$ égale à 2 :

$$\Lambda(d_{k-J+1}) = \mathop{E}_{m=1}^{2^{J-1}} \mathop{E}_{j=0}^{N-1}\left[\alpha_k^{Sj}(S_b^1(m)) + \widetilde{\Gamma}_1^{Sj}(R_k,m) + \beta_{k+1}(m)\right] - \mathop{E}_{m=1}^{2^{J-1}} \mathop{E}_{j=0}^{N-1}\left[\alpha_k^{Sj}(S_b^0(m)) + \widetilde{\Gamma}_0^{Sj}(R_k,m) + \beta_{k+1}(m)\right]$$

en notant la métrique de branche $\Gamma(R_k,S_b^i(m),m,S_j) = \widetilde{\Gamma}_i^{Sj}(R_k,m)$ et, pour la dimension de l'alphabet utilisé $M$ égale à 4 :

$$\Lambda(a_{k-J+1}) = \mathop{E}_{m=1}^{4^{J-1}} \mathop{E}_{j=0}^{N-1}\left[\mathop{E}_{x\in\{0,1\}}\left(\alpha_k^{Sj}(S_b^x(m)) + \widetilde{\Gamma}_x^{Sj}(R_k,m) + \beta_{k+1}(m)\right)\right]$$
$$- \mathop{E}_{m=1}^{4^{J-1}} \mathop{E}_{j=0}^{N-1}\left[\mathop{E}_{x\in\{2,3\}}\left(\alpha_k^{Sj}(S_b^x(m)) + \widetilde{\Gamma}_x^{Sj}(R_k,m) + \beta_{k+1}(m)\right)\right]$$

$$\Lambda(b_{k-J+1}) = \mathop{E}_{m=1}^{4^{J-1}} \mathop{E}_{j=0}^{N-1}\left[\mathop{E}_{x\in\{0,2\}}\left(\alpha_k^{Sj}(S_b^x(m)) + \widetilde{\Gamma}_x^{Sj}(R_k,m) + \beta_{k+1}(m)\right)\right]$$
$$- \mathop{E}_{m=1}^{4^{J-1}} \mathop{E}_{j=0}^{N-1}\left[\mathop{E}_{x\in\{1,3\}}\left(\alpha_k^{Sj}(S_b^x(m)) + \widetilde{\Gamma}_x^{Sj}(R_k,m) + \beta_{k+1}(m)\right)\right]$$

Fig. 1

Fig. 2

Fig. 3

$J = 3$

$S_b^0(m)$

$S_0$

$S_1$

$S_2$

$S_3$

$S_b^1(m)$

$S_f^0(m)$

$m$

$S_f^1(m)$

00

01

10

11

$k-3$    $k-2$    $k-1$    $k$    $k+1$

EP 1 115 233 A1

Fig. 4a

$J = 4$

| | | |
|---|---|---|
| i | i | x |
| x | i | x |
| b | c | i |
| a | b | c |
| x | a | b |

Fig. 4b

| Office européen des brevets | **RAPPORT DE RECHERCHE EUROPEENNE** | Numéro de la demande EP 00 40 3677 |
|---|---|---|

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.7) |
|---|---|---|---|
| X | HOEHER P: "TCM ON FREQUENCY-SELECTIVE FADING CHANNELS: A COMPARISON OF SOFT-OUTPUT PROBABILISTIC EQUALIZERS" PROCEEDINGS OF THE GLOBAL TELECOMMUNICATIONS CONFERENCE AND EXHIBITION(GLOBECOM), 2 décembre 1990 (1990-12-02), pages 376-381, XP000218757 New York, NY, USA, IEEE, USA ISBN: 0-87942-632-2 * sections 3.1 et 3.2 * | 1,2,10 | H04L25/03 |
| A | | 3-9, 11-17 | |
| X | FITZ M P ET AL: "Reduced complexity symbol-by-symbol soft output algorithms" IEEE GLOBECOM 1996. COMMUNICATIONS: THE KEY TO GLOBAL PROSPERITY. COMMUNICATIONS THEORY MINI-CONFERENCE., pages 21-25, XP002150096 New York, NY, USA, IEEE, USA ISBN: 0-7803-3336-5 * le document en entier * | 1,2 | |
| A | | 3-17 | **DOMAINES TECHNIQUES RECHERCHES (Int.Cl.7)** H04L H03M |
| A | LI Y ET AL: "Optimum soft-output detection for channels with intersymbol interference" IEEE TRANSACTIONS ON INFORMATION THEORY, vol. 41, no. 3, 1 mai 1995 (1995-05-01), pages 704-713, XP002088078 New York, NY, USA, IEEE,USA ISSN: 0018-9448 * page 705, colonne 2, ligne 3 - ligne 13 * * page 707, colonne 2, ligne 10 - ligne 33 * | 1-17 | |

-/--

Le présent rapport a été établi pour toutes les revendications

| Lieu de la recherche | Date d'achèvement de la recherche | Examinateur |
|---|---|---|
| LA HAYE | 3 avril 2001 | Moreno, M |

EPO FORM 1503 03.82 (P04C02)

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

**Office européen des brevets**

# RAPPORT DE RECHERCHE EUROPEENNE

Numéro de la demande

EP 00 40 3677

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.7) |
|---|---|---|---|
| A | EP 0 946 014 A (MATRA NORTEL COMMUNICATIONS) 29 septembre 1999 (1999-09-29) * page 3, ligne 37 - ligne 55 * * page 6, ligne 9 - page 7, ligne 20 * * page 8, ligne 20 - ligne 21 * --- | 1-17 | |
| A | US 4 823 346 A (KOBAYASHI NAOYA ET AL) 18 avril 1989 (1989-04-18) * page 11, colonne 1, ligne 38 - ligne 48 * * page 12, colonne 3, ligne 3 - ligne 7 * ----- | 3 | |

**DOMAINES TECHNIQUES RECHERCHES (Int.Cl.7)**

Le présent rapport a été établi pour toutes les revendications

| Lieu de la recherche | Date d'achèvement de la recherche | Examinateur |
|---|---|---|
| LA HAYE | 3 avril 2001 | Moreno, M |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 00 40 3677

La présente annexe indique les membres de la famille de brevets relatifs aux documents brevets cités dans le rapport de recherche européenne visé ci–dessus.
Lesdits members sont contenus au fichier informatique de l'Office européen des brevets à la date du
Les renseignements fournis sont donnés à titre indicatif et n'engagent pas la responsabilité de l'Office européen des brevets.

03-04-2001

| Document brevet cité au rapport de recherche | Date de publication | Membre(s) de la famille de brevet(s) | | Date de publication |
|---|---|---|---|---|
| EP 0946014 A | 29-09-1999 | FR | 2776873 A | 01-10-1999 |
| | | NO | 991412 A | 27-09-1999 |
| US 4823346 A | 18-04-1989 | JP | 2051220 C | 10-05-1996 |
| | | JP | 7083279 B | 06-09-1995 |
| | | JP | 62243430 A | 23-10-1987 |
| | | JP | 2008574 C | 11-01-1996 |
| | | JP | 7040669 B | 01-05-1995 |
| | | JP | 62243431 A | 23-10-1987 |

EPO FORM P0460

Pour tout renseignement concernant cette annexe : voir Journal Officiel de l'Office européen des brevets, No.12/82